# EUROPÄISCHE PATENTSCHRIFT

(11) **EP 1 251 991 B1**
(45) Veröffentlichungstag und Bekanntmachung des Hinweises auf die Patenterteilung: **13.04.2005**
(21) Anmeldenummer: 01901013.1
(22) Anmeldetag: 19.01.2001
(51) Int. Cl.: B23K 9/10, H02M 3/337

(54) **VERFAHREN ZUM REGELN UND/ODER STEUERN EINER SCHWEISSSTROMQUELLE MIT EINEM RESONANZKREIS**
METHOD FOR REGULATING AND/OR CONTROLLING A WELDING CURRENT SOURCE WITH A RESONANCE CIRCUIT
PROCEDE POUR LA REGULATION ET/OU LA COMMANDE D'UNE SOURCE DE COURANT DE SOUDAGE GRACE A UN CIRCUIT A RESONANCE

(30) Priorität: 20.01.2000 AT 882000
(43) Veröffentlichungstag der Anmeldung: 30.10.2002
(73) Patentinhaber: Fronius International GmbH, 4643 Pettenbach (AT)
(72) Erfinder: AIGNER, Hubert, A-4715 Taufkirchen/Trattnach (AT)
(74) Vertreter: Secklehner, Günter, Dr.
(86) Internationale Anmeldenummer: PCT/AT2001/000014
(87) Internationale Veröffentlichungsnummer: WO 2001/053030

(56) Entgegenhaltungen:
- EP-A- 0 602 495
- WO-A-97/01211
- DE-A- 4 411 227
- L.MALESANI ET AL.: "Electronic welder with high-frequency resonant inverter" IAS' 93 CONFERENCE RECORD OF THE 1993 IEEE INDUSTRY APPLICATIONS CONFERENCE 28TH IAS ANNUAL MEETING, 3. Oktober 1993 (1993-10-03), Seiten 1073-1080, XP000419573

## Beschreibung

Die Erfindung betrifft ein Verfahren zum Regeln einer Schweißstromquelle mit einem Resonanzkreis, wie es im Anspruch 1 beschrieben ist.

Es ist bereits ein Lichtbogenschweißgerät mit einem Resonanzkreis gemäß der DE 44 11 227 A1 bekannt. Dieses besteht aus einer Inverterstromquelle mit einem netzspannungsgespeisten Gleichrichter, einem Zwischenkreis, einem primärseitig getakteten Stromwandler und einem sekundärseitig des Stromwandlers angeordneten Gleichrichter, an den ein Schweißprozeß, insbesondere ein Schweißbrenner, angekoppelt ist. Die Taktung des Stromwandlers erfolgt über eine Brückenschaltung, insbesondere über eine Halbbrücke, wobei die Brückenschaltung durch Schaltelemente gebildet wird. Die Schaltelemente der Halbbrücke sind während eines vorgegebenen Schaltintervalls elektrisch leitend. Die Steuerung und/oder Regelung der Schaltelemente der Brückenschaltung erfolgt derartig, daß die Schaltelemente dann geschaltet werden, wenn entweder der Resonanzstrom oder die Resonanzspannung zu Null geworden ist, wobei für die Deaktivierung der Schaltelemente entweder der Resonanzstrom oder die Resonanzspannung auf Null abklingt und dieser Wert noch entlang eines kurzen Zeitabschnittes beibehalten wird, bevor das Deaktivieren bzw. Ausschalten der Schaltelemente erfolgt.

Nachteilig ist hierbei, daß ein derartiger Resonanzkreis nur quasi bzw. halb resonant arbeitet, d.h., daß an der Induktivität der Stromfluß nur in eine Richtung möglich ist und am Kondensator nur eine Spannung in einer Polarität auftreten kann.

Im Dokument "Conference Record of the 1993 IEEE Industry Applications Conference 28th IAS Annual Meeting" betreffend "Electronic welder with high-frequency resonant inverter" vom 3. Oktober 1993 ist ein Verfahren zum Regeln einer Schweißstromquelle, welche einen Seriell/Parallel-Konverter (LC²-Resonanzkonverter) umfaßt, angegeben. Dabei wird eine als Halbbrücke ausgebildete Brückenschaltung von einer aus mehreren Digital- und Analogschaltungen aufgebauten Steuervorrichtung angesteuert. Die Regelung der Schweißstromquelle erfolgt dabei derart, daß im Normalbetrieb der Stromquelle ein Arbeitspunkt auf einer Kennlinie des Resonanzkreises außerhalb bzw. neben der Resonanzfrequenz liegt, wofür die Brückenschaltung von der Steuervorrichtung aufeinanderfolgend entsprechend angesteuert wird. Beim Auftreten einer Änderung am Verbraucher wird dann die Brückenschaltung derart angesteuert, daß der Resonanzkreis zumindest mit der Resonanzfrequenz betrieben wird.

Weiters ist es aus dieser Druckschrift bekannt, daß der Arbeitspunkt bei einer Kennlinienänderung des Resonanzkreises immer auf der gleichen Seite vom Punkt der Resonanzfrequenz gehalten werden soll bzw. der Arbeitspunkt nicht unter die Resonanzfrequenz sinken soll, wenn sich die Kennlinie des Resonanzkreises aufgrund einer Widerstandsveränderung am Ausgang ändert. Die angegebene Halbbrücke ist zwar relativ einfach und kostengünstig aufzubauen, die Regelungsmöglichkeiten zur Erzielung eines stabilen Betriebes bei dynamischen Laständerungen sind jedoch beschränkt und nicht für alle während dem Einsatz auftretenden Lastfälle zufriedenstellend.

Aus der WO 97/01211 A1 ist ein Resonanzwandler bekannt, bei dem ebenso ein Serien/Parallel-Schwingkreis eingesetzt wird, sodaß sich für die unterschiedlichen Lastzustände wiederum unterschiedliche Resonanzfrequenzen und Kennlinien einstellen. Dabei werden für die Anpassung der Taktfrequenz des Resonanzwandlers an die unterschiedlichen Resonanzfrequenzen des Schwingkreises infolge von Laständerungen mehrere Oszillatoren eingesetzt. Aufgrund der Vielzahl möglicher Resonanzfrequenzen wird nur eine bestimmte Anzahl von Resonanzfrequenzen für die Regelung herangezogen, wobei die möglichen Betriebsfrequenzen des Konverters, also die erlaubten Resonanzfrequenzen von den eingesetzten Oszillatoren, insbesondere von deren Frequenz, abhängig sind. Bei der Regelung wird zwischen den fix vorgegebenen Frequenzen der Oszillatoren umgeschaltet, um eine Anpassung der Leistung des Konverters an die Last durchzuführen. Hierbei wird der Resonanzwandler immer mit der Resonanzfrequenz betrieben. Nachteilig ist hierbei, daß eine Vielzahl unterschiedlicher Oszillatoren für die Anpassung an die unterschiedlichen Resonanzfrequenzen notwendig ist und somit eine kontinuierliche Regelung nicht möglich ist, da sich eine Resonanzfrequenz einstellen kann, die nicht einem internen Oszillator, insbesondere der Frequenz eines Oszillators entspricht bzw. zugeordnet werden kann, sodaß immer nur eine Regelung in Stufen möglich ist. Nachteilig ist weiters, daß die Regelung des Resonanzwandlers immer nur auf der Resonanzfrequenz möglich ist und somit eine Verschiebung des Arbeitspunktes auf der Kennlinie, also ein definierter über- oder unterresonanter Betrieb nicht möglich ist. Dies ist beispielsweise bei einer geforderten Leistungsänderung des Konverters bei konstant bleibender Last notwendig.

Der Erfindung liegt die Aufgabe zugrunde, ein Verfahren zum Regeln und/oder Steuern einer Schweißstromquelle mit einem Resonanzkreis zu schaffen, bei dem in Abhängigkeit der Ausgangsbedingungen des Verbrauchers eine Steuerung und/oder Regelung der Schweißstromquelle erfolgt.

Die Aufgabe der Erfindung wird durch die Maßnahmen im Kennzeichenteil des Anspruches 1 gelöst. Vorteilhaft ist hierbei, daß durch eine derartige Regelung der Schweißstromquelle, insbesondere der Brückenschaltung, sichergestellt wird, daß der Arbeitspunkt immer auf der gleichen Seite der Resonanzkennlinie, insbesondere auf der steigenden oder fallenden Kennlinie der Resonanzkurve, gehalten wird. Ein weiterer Vorteil liegt darin, daß durch die unterschiedlichen Betriebsarten, insbesondere dem Normalbetrieb, dem Sonderbetrieb und/oder dem Sonderregelverfahren, der Resonanzreis unabhängig von einer externen Energiezufuhr weiterschwingt und damit ein Abgleich und eine Wiederanpassung der Schaltfrequenz der Schaltelemente an die Resonanzfrequenz des Resonanzkreises erfolgen kann. Ein wesentlicher Vorteil liegt auch darin, daß durch ein derartiges Verfahren zum Regeln einer Schweißstromquelle mit einem Resonanzkreis eine entsprechende Ausgangskennlinie erzielt werden kann, bei der bei einem geringen Stromfluß eine entsprechend hohe Ausgangsspannung zur Aufrechterhaltung des Lichtbogens oder zur Zündung des Lichtbogens vorhanden ist, wobei die Dimensionierung des Leistungsteils bzw. der Schweißstromquelle gering gehalten werden kann, da die zusätzlich benötigte Energie vom Resonanzkreis zur Verfügung gestellt wird.

Von Vorteil ist eine weitere Ausführungsform nach Anspruch 2, da dadurch für den Normalbetrieb ein gleichmäßiger Steuerungsablauf erzielt werden kann. Damit ist es bei gleichbleibenden Zuständen am Verbraucher möglich, einen reproduzierbaren Pulsbetrieb aufrechtzuerhalten und somit ein gutes Schweißergebnis zu erzielen.

Durch eine weitere Ausführungsvariante nach Anspruch 3 wird es möglich, nach einer Änderung insbesondere am Widerstand des Verbrauchers, den vorgeplanten Normalzustand in Anpassung an den Resonanzkreis wiederherzustellen.

Weitere vorteilhafte Maßnahmen sind in den Ansprüchen 4 bis 17 beschrieben. Die sich daraus ergebenden Vorteile sind aus der Beschreibung zu entnehmen.

Die Erfindung wird anschließend durch Ausführungsbeispiele näher beschrieben.

Es zeigen:
- Fig. 1: eine schematische Darstellung einer Schweißmaschine bzw. eines Schweißgerätes;
- Fig. 2: ein Schaltschema einer Schweißstromquelle mit einem Resonanzkreis in vereinfachter, schematischer Darstellung;
- Fig. 3: ein Ablaufschema für die Schweißstromquelle in vereinfachter, schematischer Darstellung;
- Fig. 4: ein Diagramm einer Resonanzkennlinie der Schweißstromquelle in vereinfachter, schematischer Darstellung,
- Fig. 5: ein Ablaufdiagramm für die Steuerung der Schweißstromquelle bei gleichbleibender Resonanzfrequenz in vereinfachter, schematischer Darstellung;
- Fig. 6: ein Ablaufdiagramm für die Steuerung der Schweißstromquelle bei einer Erhöhung der Resonanzfrequenz in vereinfachter, schematischer Darstellung;
- Fig. 7: ein Ablaufdiagramm für die Steuerung der Schweißstromquelle bei einer Verringerung der Resonanzfrequenz in vereinfachter, schematischer Darstellung;
- Fig. 8: ein weiteres Ablaufschema für die Schweißstromquelle in vereinfachter, schematischer Darstellung;
- Fig. 9: ein Ablaufdiagramm für die Steuerung der Schweißstromquelle bei einer Erhöhung der Resonanzfrequenz - gemäß Fig. 8 - in vereinfachter, schematischer Darstellung;
- Fig. 10: eine Ausgangskennlinie der Schweißstromquelle in vereinfachter, schematischer Darstellung;
- Fig. 11: ein Blockschaltbild für die Regelung oder Steuerung der Schweißstromquelle in vereinfachter, schematischer Darstellung;
- Fig. 12: ein weiteres Schaltschema einer Schweißstromquelle mit einem Resonanzkreis in vereinfachter, schematischer Darstellung.

Einführend wird festgehalten, daß gleiche Teile der einzelnen Ausführungsbeispiele mit gleichen Bezugszeichen versehen werden. Die in den einzelnen Ausführungsbeispielen angegebenen Lageangaben sind bei einer Lageänderung sinngemäß auf die neue Lage zu übertragen.

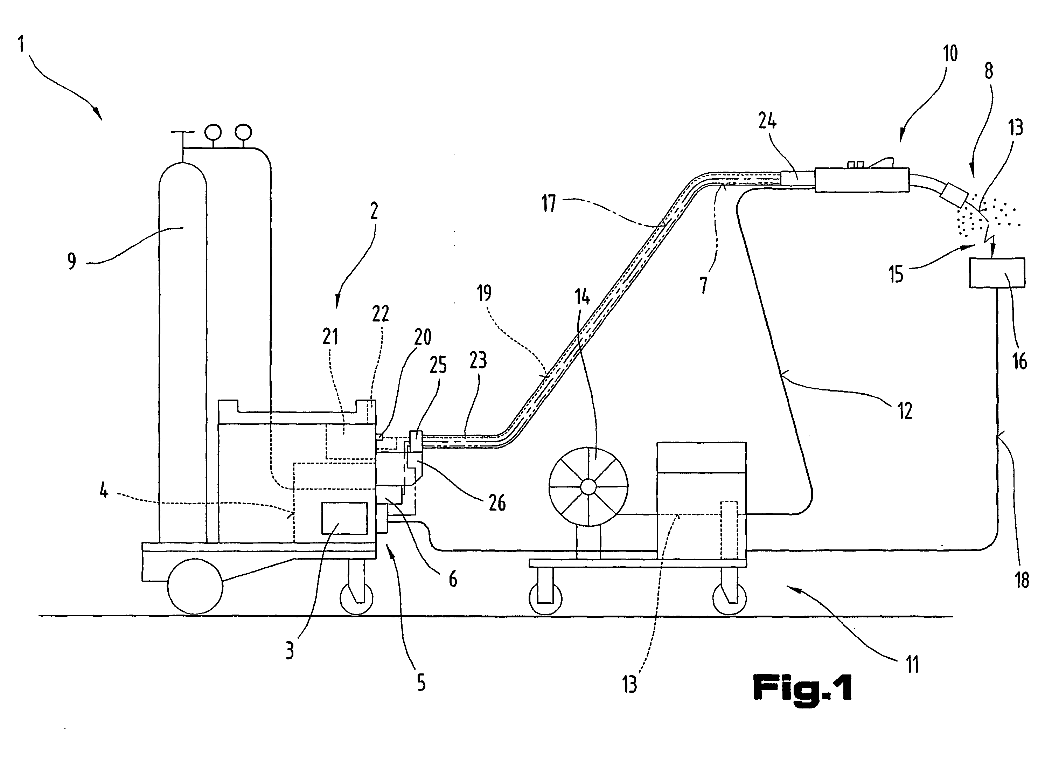

In Fig. 1 ist eine Schweißanlage bzw. ein Schweißgerät 1 für verschiedenste Schweißverfahren, wie z.B. MIG/MAG-Schweißen bzw. TIG-Schweißen oder Elektroden-Schweißverfahren, gezeigt. Selbstverständlich ist es möglich, daß die erfindungsgemäße Lösung bei einer Stromquelle bzw. einer Schweißstromquelle eingesetzt werden kann.

Das Schweißgerät 1 umfaßt eine Schweißstromquelle 2 mit einem Leistungsteil 3, einer Steuervorrichtung 4 und einem dem Leistungsteil 3 bzw. der Steuervorrichtung 4 zugeordneten Umschaltglied 5. Das Umschaltglied 5 bzw. die Steuervorrichtung 4 ist mit einem Steuerventil 6 verbunden, welches in einer Versorgungsleitung 7 für ein Gas 8, insbesondere ein Schutzgas, wie beispielsweise CO₂, Helium oder Argon und dgl., zwischen einem Gasspeicher 9 und einem Schweißbrenner 10 angeordnet ist.

Zudem kann über die Steuervorrichtung 4 noch ein Drahtvorschubgerät 11, welches für das MIG/MAG-Schweißen üblich ist, angesteuert werden, wobei über eine Versorgungsleitung 12 ein Schweißdraht 13 von einer Vorratstrommel 14 in den Bereich des Schweißbrenners 10 zugeführt wird. Selbstverständlich ist es möglich, daß das Drahtvorschubgerät 11, wie es aus dem Stand der Technik bekannt ist, im Schweißgerät 1, insbesondere im Grundgehäuse, integriert ist und nicht, wie in Fig. 1 dargestellt, als Zusatzgerät ausgebildet ist.

Der Strom zum Aufbauen eines Lichtbogens 15 zwischen dem Schweißdraht 13 und einem Werkstück 16 wird über eine Versorgungsleitung 17 vom Leistungsteil 3 der Schweißstromquelle 2 dem Schweißbrenner 10 bzw. dem Schweißdraht 13 zugeführt, wobei das zu verschweißende Werkstück 16 über eine weitere Versorgungsleitung 18 ebenfalls mit dem Schweißgerät 1, insbesondere mit der Schweißstromquelle 2, verbunden ist und somit über den Lichtbogen 15 ein Stromkreis aufgebaut werden kann.

Zum Kühlen des Schweißbrenners 10 kann über einen Kühlkreislauf 19 der Schweißbrenner 10 unter Zwischenschaltung eines Strömungswächters 20 mit einem Flüssigkeitsbehälter, insbesondere einem Wasserbehälter 21, verbunden werden, wodurch bei der Inbetriebnahme des Schweißbrenners 10 der Kühlkreislauf 19, insbesondere eine für die im Wasserbehälter 21 angeordnete Flüssigkeit verwendete Flüssigkeitspumpe, gestartet wird und somit eine Kühlung des Schweißbrenners 10 bzw. des Schweißdrahtes 13 bewirkt werden kann.

Das Schweißgerät 1 weist weiters eine Ein- und/oder Ausgabevorrichtung 22 auf, über die die unterschiedlichsten Schweißparameter bzw. Betriebsarten des Schweißgerätes 1 eingestellt werden können. Dabei werden die über die Ein- und/oder Ausgabevorrichtung 22 ein gestellten Schweißparameter an die Steuervorrichtung 4 weitergeleitet und von dieser werden anschließend die einzelnen Komponenten der Schweißanlage bzw. des Schweißgerätes 1 angesteuert.

Weiters ist in dem dargestellten Ausführungsbeispiel der Schweißbrenner 10 über ein Schlauchpaket 23 mit dem Schweißgerät 1 bzw, der Schweißanlage verbunden. In dem Schlauchpaket 23 sind die einzelnen Leitungen vom Schweißgerät 1 zum Schweißbrenner 10 angeordnet. Das Schlauchpaket 23 wird über eine zum Stand der Technik zählende Verbindungsvorrichtung 24 mit dem Schweißbrenner 10 verbunden, wogegen die einzelnen Leitungen im Schlauchpaket 23 mit den einzelnen Kontakten des Schweißgerätes 1 über Anschlußbuchsen bzw. Steckverbindungen verbunden sind. Damit eine entsprechende Zugentlastung des Schlauchpaketes 23 gewährleistet ist, ist das Schlauchpaket 23 über eine Zugentlastungsvorrichtung 25 mit einem Gehäuse 26, insbesondere mit dem Grundgehäuse des Schweißgerätes 1, verbunden.

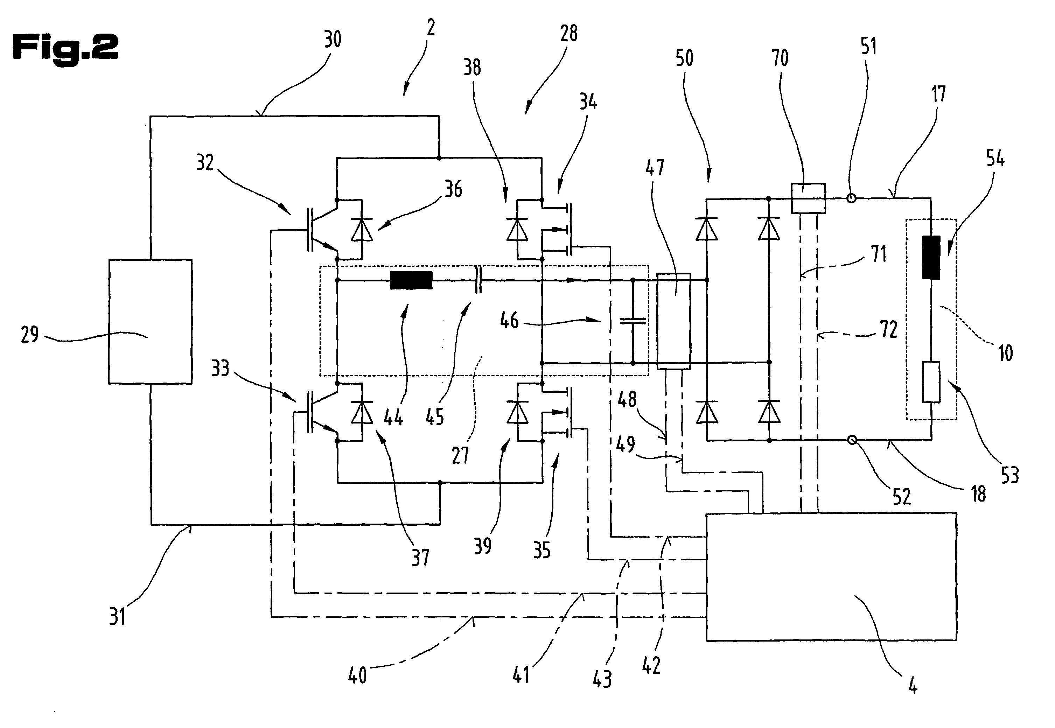

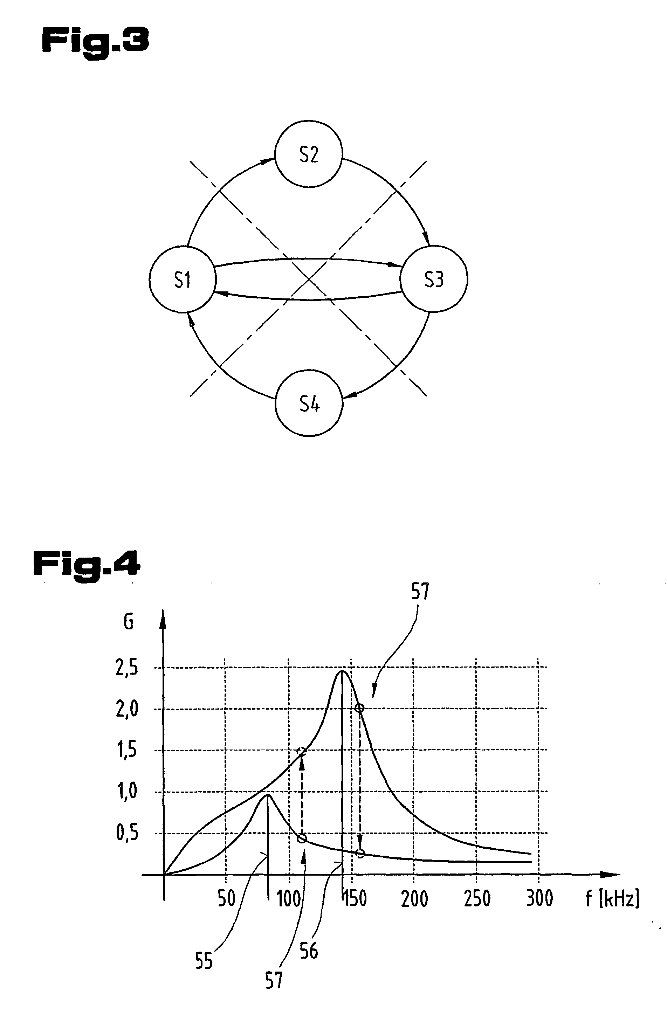

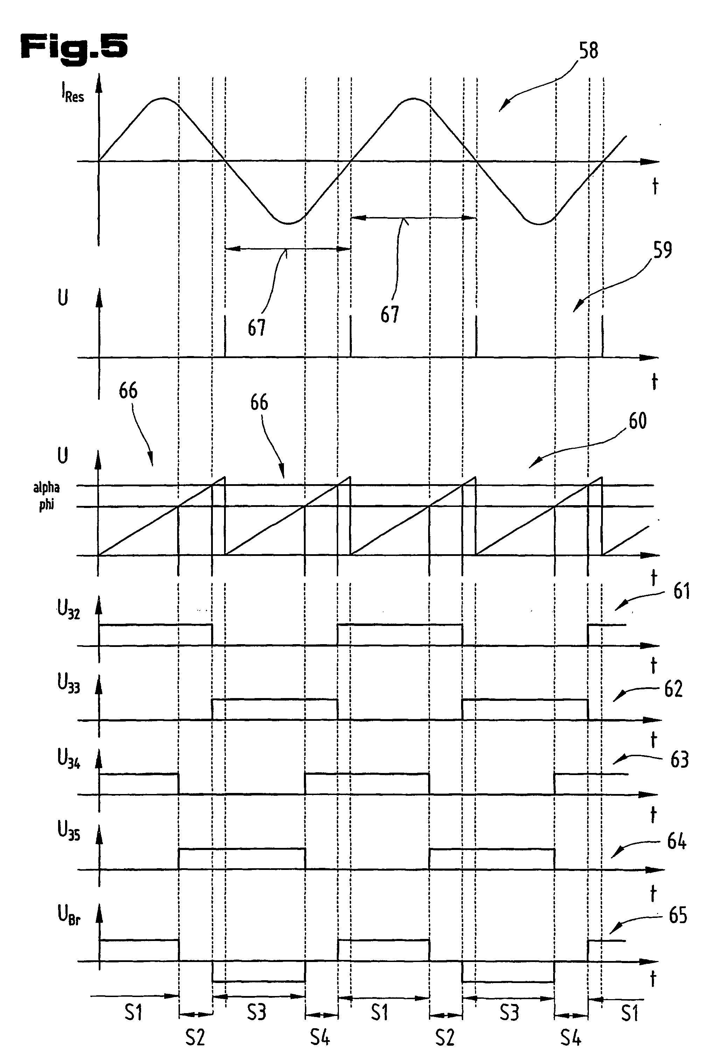

In den Fig. 2 bis 7 ist eine Anwendung der Schweißstromquelle 2 mit einem Resonanzkreis 27, insbesondere mit einem Seriell/Parallel-Konverter, dargestellt, wobei in Fig. 2 ein vereinfachtes Ersatzschaltbild der Schweißstromquelle 2 gezeigt ist. In Fig. 3 ist ein Ablaufschema für die Steuerung einer Brückenschaltung 28 der Schweißstromquelle 2 dargestellt. Eine schematische Darstellung einer Frequenzkennlinie für den Resonanzkreis 27 ist in Fig. 4 ersichtlich. In den Fig. 5 bis 7 sind Kennlinien für die Steuerung und/oder Regelung der Schweißstromquelle 2 mit dem Resonanzkreis 27 dargestellt.

Bei dem Aufbau der Schweißstromquelle 2 - gemäß Fig. 2 - ist eine Energiequelle 29 schematisch angedeutet. Diese Energiequelle 29 ist mit einem Energieversorgungsnetz, insbesondere einem öffentlichen Versorgungsnetz, wie beispielsweise einem 230V oder 400V Wechselspannungsnetz, welches nicht dargestellt ist, verbunden. In der Energiequelle 29 wird die gelieferte Wechselspannung in eine Gleichspannung umgewandelt, wobei es jedoch möglich ist, daß beispielsweise ein Hochsetzsteller oder Tiefsetzsteller nachgeschaltet ist.

Die Energiequelle 29 ist über Leitungen 30, 31 mit der Brückenschaltung 28 verbunden und versorgt diese mit einer Gleichspannung. Die Brückenschaltung 28 kann durch eine Vollbrükke oder Halbbrücke realisiert werden, wobei in dem dargestellten Ausführungsbeispiel eine Vollbrücke eingesetzt wird, die aus vier Schaltelementen 32 bis 35 und zugeordneten Freilaufdioden 36 bis 39 gebildet ist. Dabei werden die Schaltelemente 32 und 33 beispielsweise aus sogenannten IGBT-Transistoren und die Schaltelemente 34 und 35 beispielsweise durch MOSFET-Transistoren gebildet.

Für die Steuerung der einzelnen Schaltelemente 32 bis 35 sind diese über Steuerleitungen 40 bis 43, welche mit strichpunktierten Linien dargestellt sind, mit der Steuervorrichtung 4 verbunden, sodaß durch Beaufschlagen der Steuerleitungen 40 bis 43 mit Energie die Schaltelemente 32 bis 35 aktiviert bzw. deaktiviert werden können. Im Mittelpunkt der Brückenschaltung 28 wird der Resonanzkreis 27, insbesondere der Seriell/Parallel-Konverter, angeschlossen, wobei dieser aus einer Induktivität 44 und einer in Serie zu diesem geschalteten Kondensator 45 sowie einen parallel zum Verbraucher geschalteten weiteren Kondensator 46 aufgebaut wird. Der Resonanzkreis 27 ist in dem Ausführungsbeispiel mit strichlierten Linien umrandet.

Am Ausgang des Resonanzkreises 27 ist eine Meßvorrichtung 47 zum Erfassen des Stromes und der Spannung im Resonanzkreis 27 angeordnet, wobei die Meßvorrichtung 47 über Leitungen 48, 49 zur Übermittlung der Stromhöhe und/oder der Spannungshöhe mit der Steuervorrichtung 4 verbunden ist. An die Meßvorrichtung 47 schließt sich ein Gleichrichter 50, welcher durch einzelne Dioden dargestellt ist, an, wobei der Ausgang des Gleichrichters 50 mit Ausgangsklemmen 51 und 52 des Schweißgerätes 1 verbunden ist. An diese Ausgangsklemmen 51 und 52 ist der Verbraucher, insbesondere der Schweißbrenner 10, über die Versorgungsleitungen 17, 18 angeschlossen, wobei der Schweißbrenner 10 durch ein elektrisches Ersatzschaltbild in Form eines ohmschen Widerstandes 53 und einer Leitungsinduktivität 54 der Versorgungsleitungen 17 und 18 dargestellt ist.

Auf die elektrische Beschreibung des Funktionsprinzips der Energiequelle 29, der Brückenschaltung 28 und des Resonanzkreises 27, also der Schweißstromquelle 2, wird nicht näher eingegangen, da diese bereits aus dem Stand der Technik bekannt sind. Nachstehend wird das Steuerverfahren und/oder Regelverfahren zum Versorgen des Verbrauchers, insbesondere des Schweißbrenners 10, mit Strom und Spannung zum Durchführen eines Schweißprozesses beschrieben.

Grundsätzlich ist zu erwähnen, daß, gemäß Fig. 4, bei einer Anwendung eines Resonanzkreises 27, insbesondere eines Einsatzes eines Seriell/Parallel-Konverters, dieser immer über oder unter der Resonanzfrequenz, bevorzugt über der Resonanzfrequenz, betrieben wird. Die Resonanzfrequenz stellt sich dabei in Abhängigkeit des Ausgangszustandes, insbesondere des Lastwiderstandes an den Ausgangsklemmen 51 und 52, also des Verbrauchers, ein, d.h., daß bei einer Widerstandsänderung am Ausgang, also am Schweißbrenner 10, beispielsweise durch Auftreten eines Kurzschlusses, sich die Resonanzfrequenz ändert, wobei über die Dimensionierung der Schweißstromquelle 2, insbesondere des Resonanzkreises 27, ein entsprechendes Frequenzband festgelegt werden kann. In der dargestellten Frequenzkennlinie in Fig. 4 ist eine Kennlinie mit einer Minimalresonanzfrequenz 55 und einer Maximalresonanzfrequenz 56 eingetragen. Die Minimalresonanzfrequenz 55 stellt sich dann ein, wenn zwischen dem Schweißdraht 13 und dem Werkstück 16 ein Kurzschluß auftritt und somit der ohmsche Widerstand 53 zu null wird. Die Maximalresonanzfrequenz 56 stellt sich dann ein, wenn der Lichtbogen 15 zwischen dem Schweißdraht 13 und dem Werkstück 16 erlischt, da dadurch der ohmsche Widerstand 53 unendlich groß wird.

Bei einem Betrieb der Schweißstromquelle 2, also bei einem Schweißprozeß, kann sich die Resonanzfrequenz des Resonanzkreises 27 innerhalb dieser beiden Frequenzen aufgrund der unterschiedlichsten Belastungen bewegen, wobei für einen sicheren Betrieb ein Arbeitspunkt 57, welcher schematisch in den Kennlinien eingetragen ist, auf einer Seite der Resonanzfrequenz, insbesondere über der Resonanzfrequenz, festgelegt wird, sodaß aufgrund von äußeren Regelungen bzw. Steuerungen von der Steuervorrichtung 4 dieser Arbeitspunkt 57 entsprechend der benötigten Leistung entlang der schematisch dargestellten Kennlinie bei gleichbleibender Resonanzfrequenz verschoben werden kann. Durch die unterschiedlichsten Ausgangszustände während eines Schweißprozesses stellen sich also unterschiedliche Kennlinien ein, die zwischen der Minimalresonanzfrequenz 55 und der Maximalresonanzfrequenz 56 liegen. Hierzu ist bei dem dargestellten schematischen Diagramm auf der Abszisse die Frequenz f und auf der Ordinate die Übertragungsfunktion G auftragen, wobei die Übertragungsfunktion G den Energiemultiplikator zwischen Ausgangsspannung und Eingangsspannung angibt, d.h., daß beispielsweise bei einer Übertragungsfunktion G mit dem Wert 2 die doppelte Ausgangsspannung gegenüber der Eingangsspannung erreicht wird.

Bei einem derartigen Einsatz des Resonanzkreises 27 in der Schweißstromquelle 2 ist jedoch zu beachten, daß bei der Regelung bzw. Steuerung der Schweißstromquelle 2 der Arbeitspunkt 57 immer auf der gleichen Seite der Resonanzfrequenz, also über oder unter der Resonanzfrequenz, gehalten wird, da beispielsweise bei einem Wechsel auf die andere Seite das Regelprinzip bzw. Steuerprinzip umgekehrt wird, d.h., daß bei Festlegung des Arbeitspunktes 57 über der Resonanzfrequenz dieser bei einer Ausgangsänderung, also bei einer Widerstandsänderung des Verbrauchers und somit bei einer geänderten Resonanzfrequenz wiederum über der neuen Resonanzfrequenz liegen muß.

Wird, wie strichliert dargestellt, der Arbeitspunkt 57, beispielsweise bei der Kennlinie der Minimalresonanzfrequenz 55, über diese Resonanzfrequenz gelegt, so tritt bei einer schnellen Ausgangsänderung, insbesondere einer schnellen Widerstandsänderung, wie das Aufheben eines Kurzschlusses, eine Änderung der Resonanzfrequenz und somit der Kennlinie beispielsweise auf die Maximalresonanzfrequenz 56 ein. Dadurch wandert, entsprechend der strichlierten Linie, der Arbeitspunkt 57 nunmehr auf die neue Kennlinie, und zwar unter die Resonanzfrequenz, was zur Folge hat, daß sich nunmehr das Steuerprinzip geändert hat.

Muß nämlich beispielsweise von der Steuervorrichtung 4 eine Leistungsreduzierung vorgenommen werden, so muß bei einem Arbeitspunkt 57 über der Resonanzfrequenz eine Frequenzerhöhung stattfinden, sodaß der Arbeitspunkt 57 entlang der fallenden Kennlinie, wie bei der Kennlinie mit der Minimalresonanzfrequenz 55 ersichtlich, verschoben werden kann.

Da, wie zuvor erwähnt, jedoch der Arbeitspunkt 57 durch die Ausgangsänderung unterhalb der Resonanzfrequenz, wie dies bei der Kennlinie für die Maximalresonanzfrequenz 56 strichliert ersichtlich ist, versetzt wurde, wird durch die Erhöhung der Resonanzfrequenz nunmehr eine Leistungssteigerung erzielt bzw. durchgeführt, da dieser beispielsweise entlang der steigenden Kennlinie für die Maximalresonanzfrequenz 56, also auf der Seite unterhalb der Resonanzfrequenz, verschoben wird und es somit zu Fehlfunktionen der Schweißstromquelle 2 sowie zu Zerstörungen von Bauelementen kommen kann. Dieser besondere Vorgang ist besonders bei einem Wechsel der Kennlinie von einer niedrigeren Frequenz auf eine höhere Frequenz zu beachten, da umgekehrt, also bei einem Wechsel von einer höheren Frequenz auf eine niedrigere Frequenz, wie dies mit strichlierten Linien eingezeichnet ist, der Arbeitspunkt 57 immer auf der gleichen Seite der Kennlinie gehalten wird.

Damit ein derartiger Seitenwechsel des Arbeitspunktes 57 jedoch nicht geschehen kann, muß ein entsprechend nachstehend beschriebenes Steuer- und/oder Regelverfahren eingesetzt werden, bei dem sichergestellt ist, daß der Arbeitspunkt 57 auch durch schnelle Widerstandsänderungen des Verbrauchers, wie dies bei einem Schweißprozeß der Fall ist, immer auf der entsprechend festgelegten Seite der Kennlinien, bevorzugt über der Resonanzfrequenz, gehalten wird. Dies ist jedoch aufgrund der Anwendung bei einer Schweißstromquelle 2 sehr schwierig, da sehr schnelle Ausgangsänderungen bzw. Widerstandsänderungen eintreten können, sodaß bei den aus dem Stand der Technik bekannten Schweißstromquellen mit einem Resonanzkreis diese meist rückgesetzt werden, um eine entsprechende Steuerung bzw. Regelung durchführen zu können.

Damit ein Wechsel des Arbeitspunktes 57 von einer Seite auf die andere Seite der Resonanzfrequenz nicht geschehen kann, wird für die Steuerung bzw. Regelung der Schweißstromquelle 2 eine Zustandsgröße des Resonanzkreises 27, insbesondere der Stromverlauf oder der Spannungsverlauf im Resonanzkreis 27, beispielsweise der Resonanzstrom 58, wie in den Fig. 5 bis 7 dargestellt, als Regel- bzw. Steuergröße herangezogen. Selbstverständlich ist es möglich, daß anstelle des Resonanzstromes 58 auch die Resonanzspannung im Resonanzkreis 27 für die Regelung bzw. Steuerung herangezogen werden kann, wobei hierzu die Kennlinie um 90° verschoben ist. Dadurch ist sichergestellt, daß bei jeder Frequenzänderung des Resonanzkreises 27 der Arbeitspunkt 57 entsprechend versetzt bzw. verschoben wird, d.h., daß bei einer Widerstandsänderung, also einer Laständerung, die Steuerung bzw. Regelung der Schweißstromquelle 2 zumindest mit der Resonanzfrequenz oder über der Resonanzfrequenz erfolgt und somit der Arbeitspunkt 57 nicht auf die andere Seite der Resonanzfrequenz wandern kann, sodaß anschließend eine Verschiebung des Arbeitspunktes 57 auf die richtige Seite der momentanen Kennlinie durch entsprechende Frequenzerhöhung oder Frequenzverringerung durchgeführt werden kann.

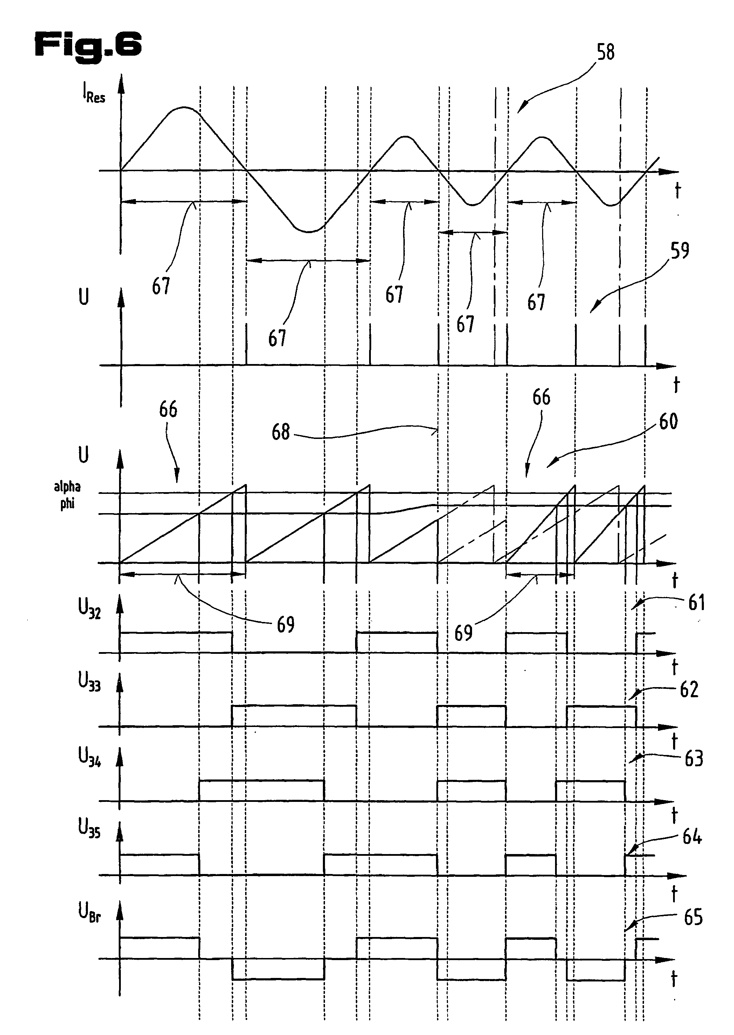

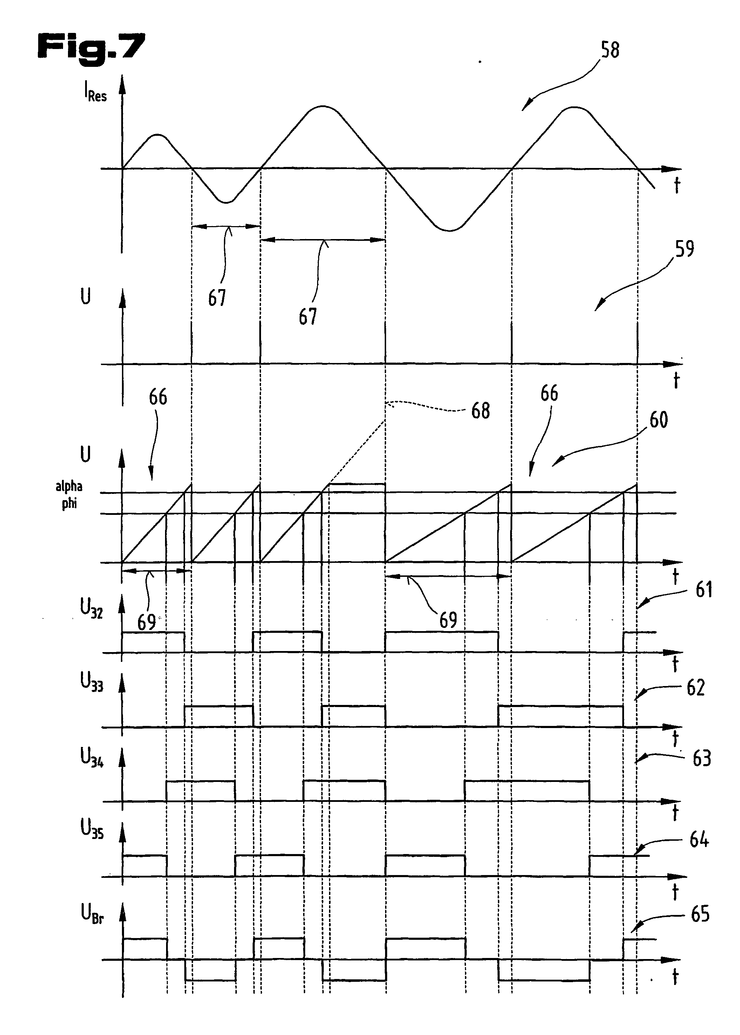

Um die Regelung bzw. Steuerung der Schweißstromquelle 2, insbesondere die Ansteuerung der Brückenschaltung 28 bzw. deren Schaltelemente 32 bis 35, näher beschreiben zu können, sind in den Fig. 5 bis 7 unterschiedliche Regel- bzw. Steuerabläufe dargestellt. Dabei ist in Fig. 5 ein Regel- bzw. Steuerablauf bei einer konstanten Resonanzfrequenz, also bei unverändertem Ausgangszustand des Verbrauchers, in Fig. 6 bei einer Erhöhung der Resonanzfrequenz, wie sie beispielsweise beim Auftrennen eines Kurzschlusses, einer Lichtbogenlängenerhöhung oder beim Erlöschen des Lichtbogens 15 auftritt, und in Fig. 7 bei einer Reduzierung der Resonanzfrequenz, wie dies beispielsweise bei der Bildung eines Kurzschlusses oder einer Lichtbogenlängenverkürzung auftritt, dargestellt. Diese dargestellten Regel- bzw. Steuerabläufe treten bei einer Schweißstromquelle 2 unverhofft auf, sodaß jederzeit eine entsprechende Regelung bzw. Steuerung durchgeführt werden muß.

Die Steuerung und/oder Regelung wird in Abhängigkeit mehrerer Parameter durchgeführt, wobei in den Fig. 5 bis 7 eine Zustandsgröße, insbesondere der Resonanzstrom 58, des Resonanzkreises 27, eine Nullpunktdurchgangserkennung 59 durch die Steuervorrichtung 4 oder der Meßvorrichtung 47, eine Rampenkennlinie 60 mit Steuergrößen alpha und phi, sowie Spannungskennlinien 61 bis 64 der Schaltelemente 32 bis 35 und eine Spannungskennlinie 65 der Brückenschaltung 28 eingetragen sind. Die einzelnen Kennlinien sind in den einzelnen Diagrammen zeitsynchron dargestellt.

Für die Regelung bzw. Steuerung sind in der Steuervorrichtung 4 mehrere Schaltzustände S 1 bis 54 für die Brückenschaltung 28, insbesondere für deren Schaltelement 32 bis 35, hinterlegt, die entsprechend den anliegenden Ausgangsbedingungen an der Schweißstromquelle 2, also an dem Schweißbrenner 10, aufgerufen werden. Die möglichen Abläufe für die Anwendung der einzelnen Schaltzustände S1 bis S4 sind in Fig. 3 durch Pfeile dargestellt.

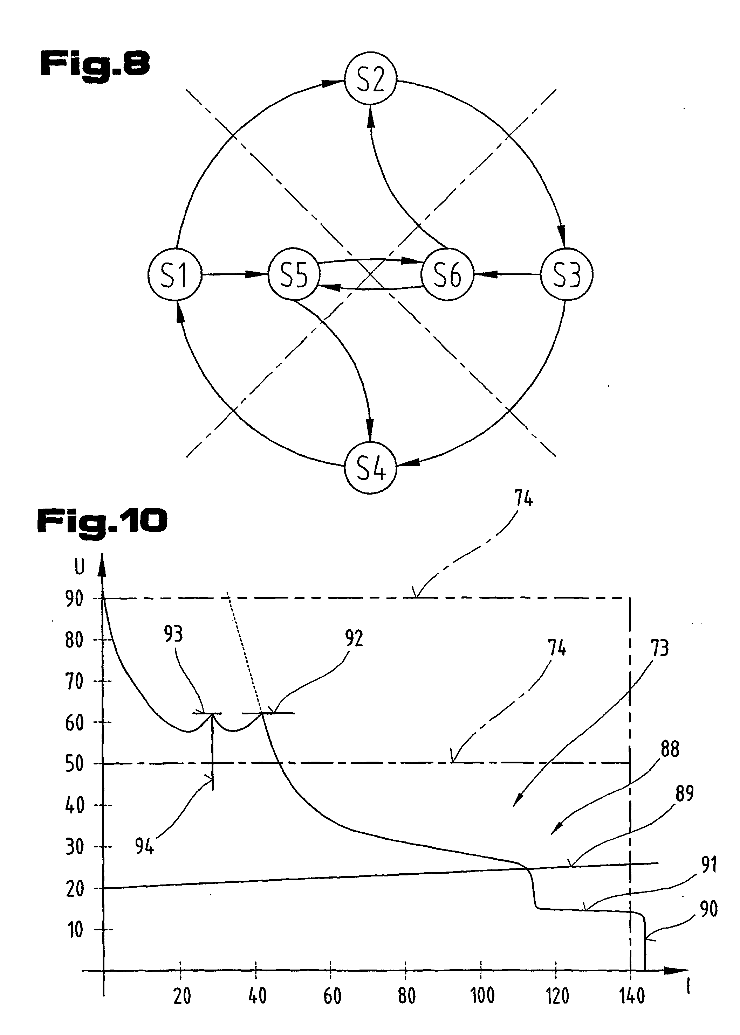

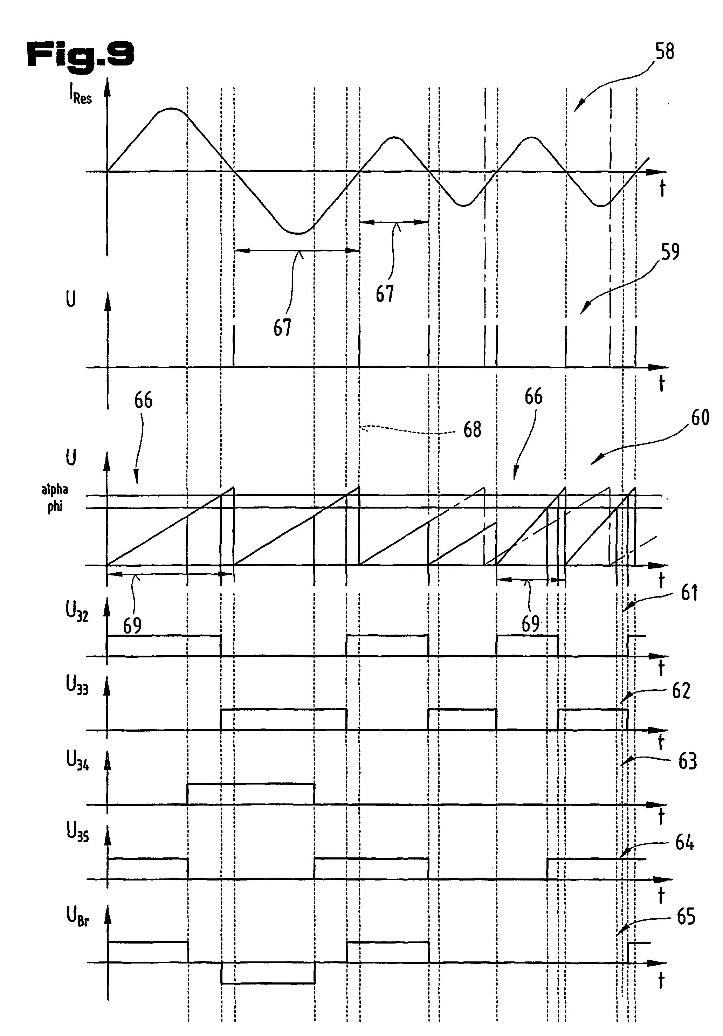

Die hinterlegten Schaltzustände S1 bis S4 werden anhand der nachfolgenden Tabelle gebildet bzw. gespeichert, wobei für den Zustand "ein" für ein Schaltelement 32 bis 35 dieses durch entsprechende Ansteuerung von der Steuervorrichtung 4 aktiviert ist. Weiters sind in der nachstehend angeführten Tabelle weitere Schaltzustände S5 und S6 eingetragen, die einem weiteren Ausführungsbeispiel - gemäß den Fig. 8 und 9 - zugeordnet sind.

| Schaltelemente | | | | | |
|---|---|---|---|---|---|
| Schaltzustände: | 32 | 33 | 34 | 35 | Energieversorgung |
| S1 | ein | aus | aus | ein | positive Treibphase |
| S2 | ein | aus | ein | aus | positiver Freilauf |
| S3 | aus | ein | ein | aus | negative Treibphase |
| S4 | aus | ein | aus | ein | negative Freilaufphase |
| S5 | aus | ein | aus | aus | Sonderbetrieb |
| S6 | ein | aus | aus | aus | Sonderbetrieb |

Die Definition für die Energieversorgung wurde insofern getroffen, als diese die Energiezufuhr in den Resonanzkreis 27 der Schweißstromquelle 2 von der Energiequelle 29 über die Brückenschaltung 28 beschreibt, wie dies in der Spannungskennlinie 65 dargestellt ist, d.h., daß bei der positiven Treibphase und der negative Treibphase von einem Gleichspannungszwischenkreis der Schweißstromquelle 2, also von der Energiequelle 29, ein Stromfluß über die Schaltelemente 32 bis 35 in den Resonanzkreis 27 und somit an den Verbraucher, insbesondere an den Schweißbrenner 10, stattfindet, wogegen bei der positiven oder negativen Freilaufphase keine Energieversorgung bzw. kein Stromfluß über die Schaltelemente 32 bis 35 der Brückenschaltung 28 von dem Zwischenkreis stattfindet, wobei jedoch ein Stromkreis im Resonanzkreis 27 aufrecht erhalten bleibt, dieser selbständig schwingt.

Dabei bildet sich der Stromfluß in den Treibphasen durch paarweises Aktivieren der Schaltelemente 32 und 35 oder 33 und 34 aus, wogegen bei der Freilaufphase die Schaltelemente 32 und 34 oder 33 und 35 aktiviert sind und somit über die Schaltelemente 32 bis 35 der Resonanzkreis 27 an ein gemeinsames Potential geschaltet ist.

Grundsätzlich ist zu erwähnen, daß aufgrund der bei einem Schaltvorgang entstehenden Verlustleistungen der Bauelemente die Schaltelemente 32 und 33, also beispielsweise die IGBT-Transistoren, kurz vor oder nach einem Stromnulldurchgang des Resonanzstromes 58 im Resonanzkreis 27 zu einem bestimmten Steuersignal alpha - gemäß der Rampenkennlinie 60 - geschaltet werden, wogegen die Schaltelemente 34 und 35, also beispielsweise die MOSFET-Transistoren, zu einem bestimmten Steuersignal, insbesondere einem Phasenwinkel phi, des Resonanzstromes 58 im Resonanzkreis 27 geschaltet werden, d.h., daß der Stromfluß im Resonanzkreis 27 als Steuer- bzw. Regelgröße herangezogen wird und somit die Schweißstromquelle 2 mit dem Resonanzkreis 27, insbesondere dem Seriell/Parallel-Konverter, mit oder über der Resonanzfrequenz, also mit oder über der Eigenfrequenz, betrieben wird, ohne daß dabei eine externe Größe, wie es aus dem Stand der Technik durch Oszillatoren bekannt ist, eingesetzt bzw. verwendet wird. Selbstverständlich ist es möglich, daß andere Transistoren eingesetzt werden können bzw. daß die Schaltelemente 32 und 33 als MOSFET-Transistoren und die Schaltelemente 34 und 35 als IGBT-Transistoren ausgebildet werden können.

Die Steuer- bzw. Regelgrößen für die Steuervorrichtung 4 zum Steuern oder Regeln der Brückenschaltung 28 werden durch die Steuersignale alpha und phi und dem Nulldurchgang einer Zustandsgröße, insbesondere des Resonanzstromes 58 oder der Resonanzspannung, gebildet, wobei das Steuersignal alpha für die Aktivierung der Schaltelemente 32 und 33 im Bereich des Stromnulldurchganges und das Steuersignal phi für die Aktivierung der Schaltelemente 34 und 35 zu einem bestimmten Phasenwinkel des Stromflusses im Resonanzkreis 27 zuständig sind. Die Steuersignale alpha und phi werden dabei von der Steuervorrichtung 4 entsprechend der benötigten Leistung berechnet bzw. festgelegt, sodaß eine entsprechende Pulsbreite der Brückenschaltung 28 durch Ansteuern der Schaltelemente 32 bis 35 gebildet werden kann, wogegen das Steuersignal des Stromnulldurchganges synchron mit den Nulldurchgängen des Resonanzstromes 58 gebildet wird.

Für die Bildung einer entsprechenden Pulsbreite zur Ansteuerung der Schaltelemente 32 bis 35 sind unterschiedliche Verfahren möglich. Dabei werden die Steuersignale phi und alpha beispielsweise in eine Rampenfunktion, gemäß der Rampenkennlinie 60 in den Fig. 5 bis 7, übertragen bzw. mit einem Rampensignal 66 verglichen, wobei bei einem auftretenden Schnittpunkt bzw. einer Übereinstimmung der Steuersignale phi und alpha mit dem Rampensignal 66 eine entsprechende Ansteuerung der Schaltelemente 32 bis 35 durchgeführt wird. Damit jedoch eine Synchronisierung des Rampensignals 66 mit der Resonanzfrequenz des Resonanzkreises 27 erfolgen kann, wird bei jedem Auftreten eines Stromnulldurchganges des Resonanzstromes 58 das kontinuierlich bzw. linear ansteigende Rampensignal 66 neu gestartet.

Hierzu ist zu erwähnen, daß die Werte der Steuersignale alpha und phi bei maximaler Pulsweite bzw. Pulsbreite, also bei maximaler Ausgangsleistung, gleich groß sein können und somit die Schweißstromquelle 2 sozusagen mit der Resonanzfrequenz betrieben wird, wobei bei einer geringeren Ausgangsleistung der Wert des Steuersignals phi kleiner als alpha ist, wodurch entweder beide Steuersignale gleichzeitig oder das Steuersignal phi vor dem Steuersignal alpha gesetzt wird. Weiters ist es möglich, daß bei dem Betrieb der Schweißstromquelle 2 mit der Resonanzfrequenz die Werte der Steuersignale phi und alpha der Pulsbreite des Resonanzstromes entsprechen, d.h., daß die Werte der Steuersignale mit dem maximal zu erreichenden Wert des Rampensignals 66 übereinstimmen und somit gleichzeitig bzw. unmittelbar nach jedem Stromnulldurchgang, was aufgrund der Schalt- und Steuerzeiten zu Stande kommen kann, die Schaltelemente 32 bis 35 aktiviert bzw. deaktiviert werden. Die Pulsbreite wird also durch die Differenz der beiden Steuersignale phi und alpha bestimmt.

Selbstverständlich ist es auch möglich, daß dieser Vergleich bzw. das Festlegen der Ein- und/oder Ausschaltzeitpunkte für die Schaltelemente 32 bis 35 in digitaler Form beispielsweise durch einen Zähler realisiert werden kann oder durch eine einfache Berechnung von der Steuervorrichtung 4 durchgeführt werden kann.

Das Rampensignal 66 wird bei dem dargestellten Ausführungsbeispiel beispielsweise derart gebildet, daß dieses innerhalb einer halben Periodendauer des Resonanzstromes 58, also zwischen zwei Stromnulldurchgängen, auf einen festgelegten Wert ansteigt, wodurch innerhalb einer Halbwelle bzw. einer halben Periodendauer des Resonanzstromes 58 eine Steuerung der Brückenschaltung 28 von der Steuervorrichtung 4 durchgeführt wird, da im Normalbetrieb die Steuersignale phi und alpha gesetzt werden.

Dabei kann es jedoch aufgrund der unterschiedlichen Periodendauer, also aufgrund der unterschiedlichen Resonanzfrequenzen des Resonanzkreises 27 durch unterschiedliche Ausgangsbedingungen, passieren, daß die Zeitdauer für eine Halbwelle bzw. einer halben Periodendauer, in der das Rampensignal 66 auf den festgelegten Wert ansteigen muß, aufgrund der Änderung der Resonanzfrequenz verändert wird, d.h., daß beispielsweise bei einer Ausgangsänderung die Resonanzfrequenz der Schweißstromquelle 2 verändert wird, wobei diese Ausgangsänderung, insbesondere einer Widerstandsänderung am Verbraucher, durch Auftreten eines Kurzschlusses, einem Betrieb des Lichtbogens oder durch Erlöschen des Lichtbogens hervorgerufen werden kann, sodaß beispielsweise die Periodendauer, insbesondere eine halbe Periode 67 des Resonanzstromes 58, verkürzt oder vergrößert werden kann, wobei das Rampensignal 66 den vorgegebenen Wert noch nicht erreicht oder bereits überschritten hat.

Dadurch ist es beispielsweise bei einer Resonanzfrequenzerhöhung möglich, daß das Rampensignal 66 nicht den vorgegebenen Wert erreichen kann, sondern bereits zu einem beliebigen Zeitpunkt 68 unterbrochen und neu gestartet wird, wie dies aus Fig. 6 ersichtlich ist, oder daß bei einer Resonanzfrequenzverringerung der Wert bereits erreicht bzw. überschritten ist und noch kein Stromnulldurchgang gekommen ist, wie dies aus Fig. 7 zum Zeitpunkt 68 ersichtlich ist.

Damit kann es beispielsweise gemäß Fig. 6 passieren, daß die Steuersignale phi und alpha für die Ansteuerung der Schaltelemente 32 bis 35 außerhalb des Bereiches liegen, d.h., daß das Rampensignal 66 vor Erreichen der Werte der Steuersignale phi und alpha abgebrochen und neu gestartet wird, sodaß eine Ansteuerung der Schaltelemente 32 bis 35 in Abhängigkeit der Steuersignale phi und alpha nicht mehr möglich ist, da sich der Stromfluß bzw. die Resonanzfrequenz geändert hat und somit der sinusförmige Resonanzstrom 58 sich beispielsweise vor Eintreten der Steuersignale phi und alpha von der positiven Halbwelle auf die negative Halbwelle oder umgekehrt gewechselt hat, wobei jedoch die Schaltelemente 32 bis 35 noch für die zuvor anliegende Halbwelle angesteuert sind.

Dieser Zustand wird von der Steuervorrichtung 4 derartig erkannt bzw. derartig überwacht, daß von der Steuervorrichtung 4 jeder Stromnulldurchgang des Resonanzstromes 58 erfaßt wird, wobei von der Steuervorrichtung 4 nach Eingang bzw. Aktivierung des Stromnulldurchganges überprüft wird, ob die Steuersignale phi und alpha, welche mit dem Rampensignal 66 verglichen werden, bereits aktiviert wurden oder nicht, sodaß von der Steuervorrichtung 4 festgelegt werden kann, auf welchen Schaltzustand S1 bis S4 die Schaltelemente 32 bis 33 umgeschaltet werden müssen.

Die Umschaltung zwischen den einzelnen Schaltzuständen S1 bis S4 erfolgt derartig, daß bei einem stabilen Normalbetrieb der Schweißstromquelle 2 ohne einer Frequenzänderung - gemäß Fig. 5 - die Brückenschaltung 28 von der positiven Treibphase - Schaltzustand S1 - in die positive Freilaufphase - Schaltzustand S2 - und von dieser in die negative Treibphase - Schaltzustand S3 - und anschließend in die negative Freilaufphase - Schaltzustand S4 - geschaltet wird. Von der negativen Freilaufphase wird in die positive Treibphase geschaltet, sodaß der Regelkreis geschlossen ist. Dieser Ablauf wird von der Steuervorrichtung 4 dann durchgeführt, wenn ein stabiler Betrieb der Brückenschaltung 28 über der Resonanzfrequenz, gemäß Fig. 5, vorliegt und somit die halbe Pulsbreite 67 zwischen den Stromnulldurchgängen konstant bzw. annähernd gleich bleibt.

Tritt jedoch der Fall ein, daß der Stromnulldurchgang des Resonanzstromes 58 vor einem der beiden Steuersignale phi und alpha oder zwischen diesen auftritt, wie dies beispielsweise gemäß dem Zeitpunkt 68 in Fig. 6 ersichtlich ist, so wird von der Steuervorrichtung 4 ein spezielles Steuerverfahren, insbesondere ein Sonderbetrieb, eingeleitet, um eine Synchronisation auf die neue Resonanzfrequenz des Resonanzstromes 58 vorzunehmen und gleichzeitig die Zerstörung von Bauteilen, insbesondere der Schaltelemente 32 bis 35, durch Abschaltung bei einem unzulässigen Stromfluß in Form eines Potentialwechsels, zu verhindern. Hierbei schaltet die Steuervorrichtung 4 sofort bei Auftritt des Stromnulldurchganges die Brückenschaltung 28 von einer Treibphase - Schaltzustand S1 oder S3 - in die weitere Treibphase - Schaltzustand S3 oder S1.

Daraufhin wird von der Steuervorrichtung 4 wiederum überprüft, ob vor dem nächsten Stromnulldurchgang die beiden Steuersignale phi und alpha bereits wieder gesetzt sind oder nicht. Ist dies nicht der Fall, so wird wiederum in die nächste Treibphase geschaltet, wie dies in Fig. 6 und 7 ersichtlich ist. Durch dieses Umschalten von einer Treibphase in die nächste Treibphase bei Auftreten eines Stromnulldurchganges wird ein kurzzeitiger Betrieb der Schweißstromquelle 2 mit der Resonanzfrequenz verwirklicht, sodaß eine Verschiebung des Arbeitspunktes 57 auf die andere Seite, wie zuvor beschrieben, unterbunden wird. Dadurch wird auch die Möglichkeit geschaffen, daß durch den Betrieb mit der Resonanzfrequenz eine neuerliche Synchronisierung der Brückenschaltung 28 bzw. des Rampensignals 66 auf die neue Resonanzfrequenz vorgenommen werden kann.

Damit eine Verringerung der Resonanzfrequenz ebenfalls erkannt werden kann, wird von der Steuervorrichtung 4 bei Auftreten eines Stromnulldurchganges der Wert des Rampensignals 66 überprüft und festgestellt, ob der Wert erreicht ist oder bereits überschritten wurde, sodaß wiederum ein Sonderbetrieb von der Steuervorrichtung 4 eingeleitet werden kann. Selbstverständlich ist es möglich, daß diese Überwachung auch für eine Frequenzerhöhung eingesetzt werden kann, da lediglich von der Steuervorrichtung 4 bei einem Stromnulldurchgang überprüft werden muß, ob die Steuersignale phi und alpha bereits gesetzt sind oder nicht.

Damit eine Anpassung des Rampensignals 66 und somit der weiteren Steuersignale phi und alpha an die neue Resonanzfrequenz des seriell/parallel Resonanzkreises 27 durchgeführt werden kann, wird von der Steuervorrichtung 4 diese neue Zeitdauer 69, insbesondere die neu halbe Periode 67, in der das Rampensignal 66 den festgelegten Wert erreichen muß, ermittelt, sodaß durch ein vorgegebenes Verfahren die Zeitdauer für das Rampensignal 66 reduziert bzw. erhöht werden kann, d.h., daß von der Steuervorrichtung 4 die Zeitdauer 69 zwischen zwei Stromnulldurchgängen, also die halbe Periode 67 des Resonanzstromes 58, ständig erfaßt und bei Abweichung eine entsprechende Änderung am Rampensignal 66 vornimmt.

Dabei ist es möglich, daß beispielsweise eine halbe Periodendauer das Rampensignal 66 ignoriert wird, sodaß bei dem nächsten Stromnulldurchgang das Rampensignal 66 derart gebildet bzw. in seiner Zeitdauer auf die neue Zeitdauer 69 angepaßt wird, sodaß dieses wiederum innerhalb der neuen Zeitdauer 69 den vorgeschriebenen Wert erreichen kann. Dadurch wird innerhalb einer halben Periode 67 des Resonanzstromes 58 eine Synchronisation auf die neue Resonanzfrequenz durchgeführt und es ist sichergestellt, daß bei keiner weiteren Resonanzfrequenzänderung die Steuersignale phi und alpha wieder gesetzt bzw. aktiviert werden und somit ein stabiler Betrieb möglich ist.

Bei der Umschaltung von einer Treibphase in die weitere Treibphase werden entsprechend den zuvor beschriebenen Schaltzuständen S1 bis S4 die Schaltelemente 32 bis 35 der Brükkenschaltung 28 direkt zum Stromnulldurchgang geschaltet. Dies ist insofern möglich, da durch eine sehr rasche Regelung ein noch sehr niedriger Resonanzstrom 58 mit umgekehrten Vorzeichen, also der Wechsel von einer positiven Halbwelle in eine negative Halbwelle oder umgekehrt, anliegt, sodaß ein Abschalten und Einschalten der Schaltelemente 32 oder 33 noch ohne Zerstörung der Bauelemente möglich ist. Hierzu kann beispielsweise die Stromhöhe überwacht werden, sodaß bei einem Überschreiten eines festgelegten Wertes die Schweißstromquelle 2, insbesondere die Brückenschaltung 28, kurzzeitig ausgeschaltet wird, um die Zerstörung der Schaltelemente 32 bis 35 bei nicht erlaubtem Stromfluß, wie dies bei einem unvorhergesehenen Wechsel von der positiven auf die negative Halbwelle oder umgekehrt der Fall ist. zu vermeiden.

Dabei ist es jedoch auch möglich, daß, entsprechend den Schaltzuständen S5 und S6 - gemäß Fig. 8 und 9 - die Schaltelemente 32 bis 35 in einen Sonderzustand, insbesondere einen Sonderbetrieh, geschaltet werden, wie dies nachstehend noch beschrieben wird.

Durch eine derartige Ansteuerung der Brückenschaltung 28 von einer Treibphase in eine Freilaufphase, also bei Normalbetrieb bzw. Betrieb über der Resonanzfrequenz, und bei dem Sonderbetrieb bzw. mit der Resonanzfrequenz von einer Treibphase direkt in eine weitere Treibphase wird erreicht, daß das für die Steuerung notwendige Rampensignal 66, insbesondere die Zeitdauer 69, in der das Rampensignal 66 einen vorgegebenen Wert erreichen muß, an die Resonanzfrequenz, insbesondere an die Zeitdauer 69 der Halbwelle bzw. an eine halbe Periode 67 zwischen zwei Stromnulldurchgängen des Resonanzkreises 27, angepaßt werden kann. Die Veränderung der Zeitdauer für das Rampensignal 66 kann dabei auf die unterschiedlichsten aus dem Stand der Technik bekannten Verfahren beispielsweise durch Anpassung an die zuvor auftretende Zeitdauer oder durch einfache prozentuelle Erhöhung bzw. Verringerung, usw. erfolgen. Für die Steuerung ist die Reduzierung bzw. Erhöhung der Zeitdauer 69 für das Rampensignal nicht maßgeblich, da im Sonderbetrieb die Schaltvorrichtung 4 immer von einer Treibphase in eine weitere Treibphase schaltet und erst dann wieder in den normalen Schaltzyklus zurückkehrt, wenn die Steuersignale phi und alpha vor dem nächsten Stromnulldurchgang gesetzt sind.

Dabei ist es jedoch möglich, daß für die Synchronisierung der Schweißstromquelle 2, insbesondere eines Inverters, an die neue Resonanzfrequenz den in Fig. 3 dargestellten Ablauf verläßt und somit in einen Sonderbetrieb - gemäß den Schaltzuständen S5 und S6 in Fig. 8 - übergeht. Dies wird anschließend noch näher beschrieben.

Zusammenfassend kann also gesagt werden, daß von der Steuervorrichtung 4 in Abhängigkeit der Steuersignale phi und alpha und des Stromnulldurchganges im Resonanzkreis 27 die Schaltzustände S1 bis S4 bzw. S1 bis S6 für die Schaltelemente 32 bis 35 der Brückenschaltung 28 festgelegt und diese entsprechend angesteuert werden, wobei beim Betrieb über der Resonanzfrequenz von einer Treibphase in eine Freilaufphase usw. und beim Betrieb in bzw. mit der Resonanzfrequenz von einer Treibphase in eine weitere Treibphase usw. geschaltet wird. Die Umschaltung von einer Treibphase in die nächste Treibphase wird dabei so lange durchgeführt, bis wiederum ein Betrieb über der Resonanzfrequenz möglich ist, also bis sich eine Synchronisation zwischen dem Stromverlauf im Resonanzkreis 27 und dem Rampensignal 66 einstellt und somit der Betrieb der Schweißstromquelle 2 mit dem Seriell/Parallel-Konverter wieder größer der Resonanzfrequenz eingeschwungen ist und somit die Steuersignale phi und alpha wieder gesetzt werden.

Zu dem in den Fig. 5 bis 7 dargestellten Steuer- und/oder Regelverfahren ist zu erwähnen, daß bei einem Aktivieren eines Schaltelementes 32 bis 35 dies derartig erfolgt, daß die seriell geschalteten Schaltelemente 32 und 33 oder 34 und 35 gegengleich geschaltet werden, d.h., daß beispielsweise beim Deaktivieren des Schaltelementes 32 oder 34 das Schaltelement 33 oder 35 zum selben Zeitpunkt, insbesondere um eine festgelegte Verzögerungszeit, in der Fachsprache delay-time genannt, später aktiviert wird. Selbstverständlich ist es jedoch möglich, daß die einzelnen Schaltelemente 32 bis 35 hintereinander geschaltet werden.

Damit jedoch der tatsächliche Schweißstrom für den Verbraucher, insbesondere für den Lichtbogen 15, in das Steuer- und/oder Regelverfahren miteinbezogen werden kann, ist am Ausgang der Schweißstromquelle 2 eine weitere Meßvorrichtung 70 zum Erfassen des Ausgangsstromes und der Ausgangsspannung angeordnet. Diese ist wiederum über Leitungen 71, 72 mit der Steuervorrichtung 4 verbunden, sodaß eine entsprechende Regelung des Ausgangsstromes auf den voreingestellten Sollwert durchgeführt werden kann. Die Einbeziehung des Ausgangsstromes in das Regel- bzw. Steuerverfahren ist für die Festlegung bzw. Berechnung der Pulsbreite für die Brückenschaltung 28 notwendig und es kann dadurch der Arbeitspunkt 57 entsprechend der benötigten Leistung entlang der sich einstellenden Kennlinie - gemäß Fig. 4 - durch Verändern der Pulsbreite verschoben werden, sodaß gesagt werden kann, daß die Ansteuerung der Brückenschaltung 28, insbesondere der Halb- oder Vollbrücke, durch ein Pulsbreitenmodulationsverfahren kombiniert mit variabler Periodendauer bzw. Periodenzeit durchgeführt wird.

Der Ablauf des erfindungsgemäßen Verfahrens zum Regeln einer Schweißstromquelle 2 mit einem Resonanzreis 27 kann daher beispielsweise wie folgt ablaufen:

Die von einer Energiequelle zugeführte Energie wird durch die Brückenschaltung 28 dem Resonanzkreis 27 zugeführt, in dem ein Verbraucher angeordnet ist. Der Verbraucher ist üblicherweise ein Lichtbogen 15 eines Schweißprozesses, der im Normalbetrieb mit Spannungs- und Stromimpulsen, die durch die Schaltelemente 32 bis 35 von der Brückenschaltung 28 erzeugt werden, versorgt wird. Im Normalbetrieb wird durch die Steuervorrichtung 4 die Brückenschaltung 28 bzw. deren Schaltelemente 32 bis 35 derart angesteuert, daß ein Arbeitspunkt 57 auf einer Kennlinie des Resonanzkreises 27 außerhalb einer Resonanzfrequenz liegt. Dieser Normalbetrieb ist dann gegeben, wenn am Verbraucher ein etwa gleichbleibender Widerstand vorliegt. Ändert sich der Widerstand des Verbrauchers, führt dies zu einer Veränderung der Resonanzfrequenz. Um nun in dieser Phase der Veränderung des Widerstandes des Verbrauchers einen störungsfreien Betrieb der Schaltelemente 32 bis 35 zu ermöglichen, werden diese zumindest mit der Resonanzfrequenz des Resonanzkreises geschaltet. Die Schaltung der Schaltelemente 32 bis 35 erfolgt dabei so, daß der Arbeitspunkt 57 auch während eines Regelvorganges immer auf der gleichen Seite, insbesondere auf der fallenden oder steigenden Seite der Kennlinie des Resonanzkreises 27, also immer auf der gleichen Seite bezogen auf die Resonanzfrequenz, gehalten wird. Diejenige Seite, auf der sich der Arbeitspunkt 57 bezogen auf die Resonanzfrequenz befindet, wird durch die Lage des Arbeitspunktes 57 auf der Kennlinie des Resonanzkreises 27 festgelegt, auf der sich der Arbeitspunkt 57 unmittelbar vor der Änderung des Widerstandes des Verbrauchers befunden hat. Dieser grundsätzliche Verfahrensablauf gilt für alle Ausführungsbeispiele der vorliegenden Anmeldung, wobei sich diese nur in der Art der Schaltzustände und der Schaltdauer der Schaltelemente 32 bis 35 gemäß den Schaltzuständen S1 bis S4 bei der Ausführungsform der Fig. 2 bis 7 und den Schaltzuständen 1 bis 6 gemäß der Ausführungsform der Fig. 8 und 9 voneinander unterscheiden.

In den Fig. 8 und 9 ist nunmehr ein weiteres Ausführungsbeispiel zum Steuern und/oder Regeln der Brückenschaltung 28 dargestellt, wobei in diesen die Schaltzustände S5 und S6 zum Einsatz kommen.

Die Ansteuerung der einzelnen Schaltelemente 32 bis 35 wird wiederum entsprechend den Ausgangsbedingungen an den Ausgangsklemmen 51, 52 durchgeführt, wobei bei einem stabilen Betrieb, also über der Resonanzfrequenz, die Schweißstromquelle 2, insbesondere die Schaltelemente 32 bis 35 der Brückenschaltung 28, von einer Treibphase S1 oder S3 in eine Freilaufphase S2 oder S4, gemäß den Fig. 2 bis 7, geschaltet wird. Tritt jedoch eine Ausgangsänderung, insbesondere eine Widerstandsänderung am Verbraucher, auf, so ändert sich die Resonanzfrequenz des Resonanzkreises 27, wie dies bereits zuvor ausführlich in den Fig. 2 bis 7 beschrieben wurde.

Bei dieser Ausführungsform wird nun nicht mehr von einer Treibphase S1 oder S3 in eine weitere Treibphase S3 oder S1 - gemäß der Beschreibung der Fig. 2 bis 7 - geschaltet, sondern es wird in einem Sonderbetrieb geschaltet, bei dem nunmehr die Schaltzustände S5 und/oder S6, je nachdem in welchem Schaltzustand S1 bis S4 sich die Brückenschaltung 28 gerade befindet, zum Einsatz kommen. Dieser Sonderbetrieb bewirkt nunmehr, daß von der Steuervorrichtung 4 von der Treibphase S1 oder S3 durch Auftreten einer Ausgangsänderung, also einer Erhöhung oder Verringerung der Resonanzfrequenz, die Schaltelemente 32 bis 35, entsprechend der zuvor angeführten Tabelle, in den speziellen Schaltzustand S5 oder S6 geschaltet werden, wobei hierbei die Schaltelemente 34 und 35 deaktiviert werden und die dazugehörigen Schaltelemente 33 oder 32 aktiviert bleiben. Dadurch wird der Stromfluß über die Brückenschaltung 28 von der Energiequelle 29 aktiv unterbrochen und die Schweißstromquelle 2, insbesondere der Inverter, kann sich an die neue Resonanzfrequenz anpassen bzw. synchronisieren. Durch die Anordnung der Freilaufdioden 36 bis 39 bzw. durch die integrierten Freilaufdioden der Leistungstransistoren bleibt jedoch der Stromkreis des Resonanzkreises 27 aufrecht, wodurch von der Steuervorrichtung 4 weiterhin die Stromnulldurchgänge des Resonanzstromes 58 ausgewertet werden können und somit eine Synchronisation durchgeführt werden kann.

Dies ist in dem Ausführungsbeispiel in Fig. 9 ab dem Zeitpunkt 68 ersichtlich. Zu diesem Zeitpunkt 68 wird von der Steuervorrichtung 4 erkannt, daß der Stromnulldurchgang, wie bereits zuvor beschrieben, vor den Steuersignalen phi und alpha gesetzt wurde und somit ein Umschalten in einem der nächstfolgenden Schaltzustände S1 bis S4 nicht mehr möglich ist. Von der Steuervorrichtung 4 wird die Brückenschaltung 28 nunmehr derartig angesteuert, daß von der derzeit anliegenden Treibphase S1 in den Schaltzustand S5 - gemäß Fig. 8 - umgeschaltet wird, wobei hierzu das Schaltelement 32 deaktiviert und das Schaltelement 33 aktiviert wird. Gleichzeitig wird das Schaltelement 35 deaktiviert, sodaß der Stromfluß über die Brückenschaltung 28 aktiv unterbrochen wird, wobei jedoch der Stromfluß des Resonanzkreises 27 über die Freilaufdiode 39 des Schaltelementes 35 aufrecht erhalten bleibt. Nunmehr kann, wie bereits zuvor erwähnt, die Zeitdauer 69 für das Rampensignal 66 auf die unterschiedlichsten Arten verändert werden, sodaß eine Synchronisation mit der neuen Resonanzfrequenz zustande kommt und ein Betrieb über der Resonanzfrequenz wieder möglich ist.

Grundsätzlich ist zu erwähnen, daß durch das selbständige Schwingen des Resonanzkreises 27 auch außerhalb der Treibphasen ein Stromfluß im Resonanzkreis 27 vorhanden ist, sodaß eine ständige Auswertung der Stromnulldurchgänge von der Steuervorrichtung 4 durchgeführt werden kann und somit auch eine Synchronisation im Sonderbetrieb während der Schaltzustände S5 und S6 möglich ist. Dadurch ist es auch möglich, daß durch die definierte Hinterlegung der Schaltzustände S1 bis S4 diese den Stromnulldurchgängen, insbesondere den Halbperioden des Resonanzstromes 58, zugeordnet werden können, sodaß wieder ein geregelter Einstieg in den Normalbetrieb über der Resonanzfrequenz - gemäß den Schaltzuständen S1 bis S4 - nach dem Verlassen in den Sonderbetrieb - gemäß den Schaltzuständen S1 und S4 der Fig. 2 bis 7 oder S5 und S6 der Fig. 8 und 9 - möglich ist. Die Schaltung in den Sonderbetrieb S5 und/oder S6 wird also von der Steuervorrichtung 4 bei dem Ausführungsbeispiel bei einer Erhöhung oder Reduzierung der Resonanzfrequenz vorgenommen, wobei die Erkennung und Überwachung den zuvor beschriebenen Fig. 1 bis 7 entspricht.

Bei diesem dargestellten Zustand des Ausführungsbeispiels wird nunmehr nach Auftritt des nächsten Stromnulldurchganges von dem Schaltzustand S5 in den Schaltzustand S6 geschaltet und anschließend von diesem in den Schaltzustand S4, wodurch nach erfolgter Synchronisation mit dem abgebrochenen Schaltzustand S1 die nächste Treibphase eingeleitet werden kann. Dabei ist es möglich, daß zwischen den Schaltzuständen S5 und S6 mehrmals hin und her geschaltet werden kann, oder daß bereits nach dem ersten Schaltzustand S5 wieder in den normalen Regelkreis geschaltet wird, oder daß nach dem erstmaligen Aufruf des Sonderbetriebes - Schaltzustand S5 oder S6 - zwingend in den nächsten Schaltzustand S6 oder S5 geschaltet werden muß, bevor in den Normalbetrieb zurückgekehrt wird. Es ist jedoch erforderlich, daß beim Verlassen des Normalbetriebs wieder in den richtigen Schaltzustand S1 bis S4 des Regelablaufes im Normalbetrieb eingestiegen wird. Dies ist insofern notwendig, da es durch den sinusförmigen Verlauf des Resonanzstromes 58 bei einem Stromverlauf mit falschem Potential und einem falsch zugeordneten Schaltzustand S1 bis S4 zu Bauteilzerstörungen kommen kann.

Dadurch ist es notwendig, daß die Steuervorrichtung 4 ständig die Schaltzustände S1 bis S4 den gerade anliegenden Halbperioden des Resonanzstromes 58 zuordnen kann, damit nach einer Synchronisation die Brückenschaltung 28 zum richtigen Zeitpunkt wieder in den Normalbetrieb geschaltet werden kann.

Bei den zuvor beschriebenen Ausführungsbeispielen der Fig. 1 bis 9 ist es auch möglich, daß die dargestellten Schaltzustände S1 bis S 6 verlassen werden und ein Sonderregelverfahren, wie dies nachstehend noch beschrieben ist, durchgeführt wird. Dies ist insofern notwendig, da bei einem Einsatz einer Schweißstromquelle 2 mit einem Resonanzkreis 27 diese immer über oder mit der Resonanzfrequenz betrieben werden muß und es durch entsprechend unverhoffte und starke Ausgangsänderungen, insbesondere Widerstandsänderungen des Verbrauchers, möglich ist, daß die Synchronisation nicht innerhalb einer vorgegebenen und voreinstellbaren Zeitdauer durchgeführt werden kann bzw. entsprechend hinterlegte maximal zulässige Sollwerte überschritten werden können. Durch einen zu langen Synchronisationsvorgang kann es nämlich passieren, daß sich die eigenständige Schwingung des Resonanzkreises 27 aufgrund der Bauteilverluste einstellt und somit ein Betrieb der Schweißstromquelle 2 nicht mehr möglich ist, da eine Zuordnung der Schaltzustände S1 bis S6 zu den Halbperioden des Resonanzstromes 58 nicht mehr möglich ist und somit die Schweißstromquelle 2 neu gestartet bzw. hochgefahren werden muß.

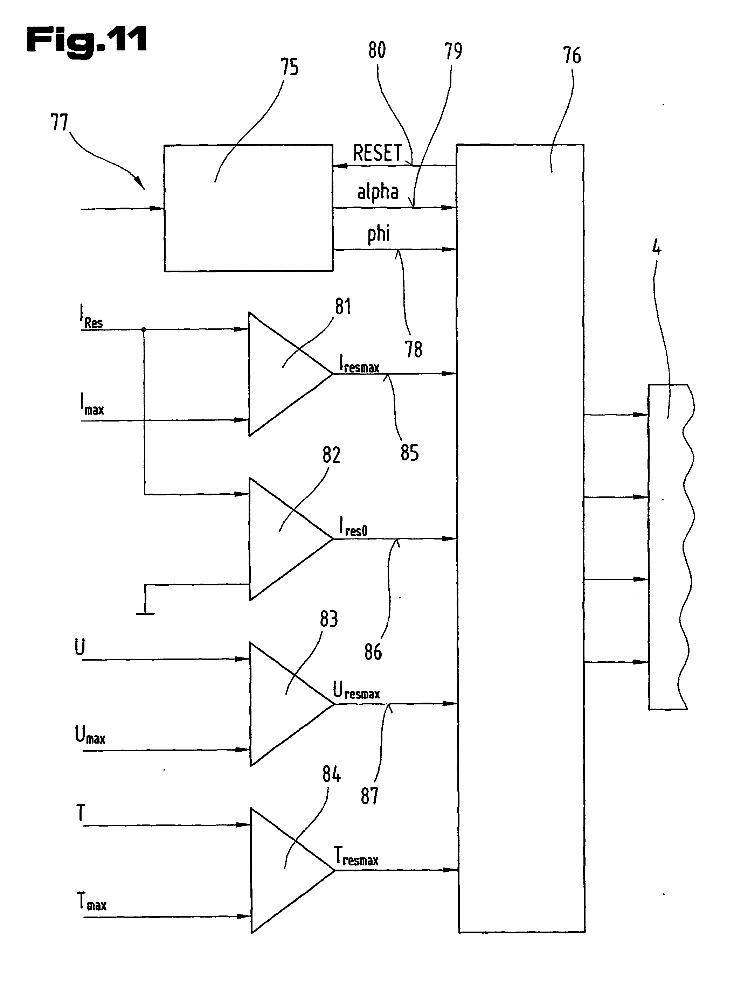

In den Fig. 10 und 11 sind Ausführungsvarianten für ein Sonderregelverfahren schematisch dargestellt. Dabei zeigt Fig. 10 eine Ausgangskennlinie 73 der Schweißstromquelle 2, die durch den Einsatz des Resonanzkreises 27 und der Steuerung über die Schaltzustände S1 bis S6 sowie dem Sonderregelverfahren erzielt werden kann. In Fig. 11 hingegen ist ein Blockschaltbild für die möglichen Parameter des Sonderregelverfahrens dargestellt, die in die Steuervorrichtung 4 eingespeißt werden bzw. an dieser für die weitere Verarbeitung anliegen.

Bei dieser Ausgangskennlinie 73 ist auf der Ordinate die Ausgangsspannung U und auf der Abszisse der Strom I aufgetragen, wobei eine mit strichpunktierten Linien dargestellte, aus dem Stand der Technik bekannte Ausgangskennlinie 74 ebenfalls eingetragen ist.

Bei dem Blockschaltbild gemäß Fig. 11 ist ein Umsetzer 75 mit einer Logik-Einheit 76 verbunden, wobei bei einem Eingang 77 des Umsetzers 75 die Meßsignale der Meßvorrichtungen 47 und/oder 70 verarbeitet werden und dabei die Steuersignale phi - gemäß Leitung 78 - und alpha - gemäß Leitung 79 - gebildet werden. Weiters ist eine Steuerleitung 80 eingetragen, über die die Logik-Einheit 76 den Umsetzer 75 zurückstellen kann, also ein RESET-Signal ausgesendet wird. Das dargestellte Blockschaltbild in Fig. 9 kann als Ersatzschaltbild für die Steuervorrichtung 4 herangezogen werden, d.h., daß die dargestellten Funktionen von der Steuervorrichtung 4 durchgeführt werden.

Weiters sind mehrere Vergleicher 81 bis 84 angeordnet, die die Aufgabe haben, den von den Meßvorrichtungen 47 und/oder 70 gelieferten, tatsächlich auftretenden Strom- und Spannungswerte, also die Istwerte, mit entsprechend hinterlegten Sollwerten zu vergleichen, sodaß aufgrund von Überschreitungen der Sollwerte eine Regelung durchgeführt werden kann und somit Bauteilzerstörungen durch zu hohe Strom- und/oder Spannungswerte verhindert werden können.

Der Vergleicher 81 hat dabei die Aufgabe, den von der Meßvorrichtung 47 gelieferten Resonanzstrom "I res" mit einem vorgegebenen maximal zulässigen Sollstrom "I max" zu vergleichen, wobei bei Überschreiten des Sollstromes "I max" ein Signal "I resmax" an die Logik-Einheit 76 über eine Leitung 85 ausgegeben wird. Der weitere Vergleicher 85 vergleicht wiederum den Resonanzstrom "I res" mit dem Null-Potential, wobei bei jedem Nulldurchgang des Resonanzstromes "I res0" ein Signal über die Leitung 86 ausgegeben wird. Durch diesen Vergleich wird die Nullpunkterkennung durchgeführt und der Logik-Einheit 75 übergeben.

Mit dem weiteren Vergleicher 83 wird die Schweißspannung "U" der Meßvorrichtung 70 mit einer vorgegebenen maximal zulässigen Sollspannung "U max" verglichen, wobei wiederum bei Überschreiten dieser Sollspannung "U max" ein Signal "U resmax" über eine Leitung 87 an die Logik-Einheit 75 übergeben wird. Der weitere Vergleicher 84 ist beispielsweise für die Überwachung der Temperatur "T" für einen im Schweißgerät 1 angeordneten Kühlkörper mit einem maximalen Sollwert "T max" einsetzbar. Selbstverständlich ist es möglich, daß noch weitere bereits aus dem Stand der Technik bekannte Überwachungssysteme eingesetzt werden können, um einen sicheren Betrieb der Schweißstromquelle 2 zu gewährleisten.

Grundsätzlich ist zu erwähnen, daß - gemäß der Kennlinie in Fig. 10 - die Schweißstromquellen 2 derart dimensioniert ist, daß diese einen maximalen Ausgangsstrom bei einer entsprechenden Ausgangsspannung liefert und für die Zündung eine entsprechend hohe Ausgangsspannung liefern kann. Bei dem aus dem Stand der Technik dargestellten Ausgangskennlinie 74 muß die Schweißstromquelle beispielsweise bei einem maximalen Ausgangsstrom von 140 A und einer Ausgangsspannung von 50 V für die Zündung des Lichtbogens 15 eine Leistung von 7 kW aufweisen.

Durch den Einsatz der erfindungsgemäßen Schweißstromquelle 2 mit dem Resonanzkreis 27 wird nunmehr erreicht, daß für die Zündung des Lichtbogens 15 eine Ausgangsspannung von maximal 90 V bei einem möglichen Ausgangsstrom von 140 A möglich ist, wobei für die Berechnung der Schweißstromquelle 2 ein Mittelwert der dargestellten Kennlinie zugrunde liegt und somit die Schweißstromquelle 2 mit einer Leistung von ca. 5 kW das Auslangen finden würde, d.h., daß durch den speziellen Verlauf der Ausgangskennlinie 73 bei geringem Stromfluß eine sehr hohe Ausgangsspannung zur Verfügung steht und somit ein stabiler Lichtbogen 15 bei niedrigem Stromfluß gebildet werden kann bzw. die Zündung des Lichtbogens 15 durch die hohe Ausgangsspannung sichergestellt ist.

Der spezielle Verlauf der Ausgangskennlinie 73 wird dadurch erreicht, daß eine entsprechend hohe Energie in dem Resonanzkreis 27, also in der Induktivität 44 und in den Kondensatoren 45. 46 vorhanden ist, die an den Ausgang für die Zündung des Lichtbogens 15 sowie der Aufrechterhaltung und zum Auflösen eines Kurzschlusses geliefert werden kann, ohne daß dabei die Schweißstromquelle 2 auf diese Ausgangsspannung und den möglichen Ausgangsstrom dimensioniert werden muß.

Bei der dargestellten Ausgangskennlinie 73 sind die Strom- und Spannungsangaben auf dem Diagramm durch eine Ausführungsvariante einer Schweißstromquelle 2 gezeigt, wobei durch entsprechende Änderung der Dimensionierung des Resonanzkreises 27 bzw. des Leistungsteils 3 die Werte für die Ausgangskennlinie 73 verändert werden, d.h., daß aufgrund der Dimensionierung sowie der Festlegung der möglichen Maximalwerte "I max und U max" die maximale Ausgangsspannung und der maximale Ausgangsstrom verändert werden.

Würde also bei einer aus dem Stand der Technik bekannten Schweißstromquelle eine Dimensionierung für eine maximale Ausgangsspannung von 90 V und einem maximalen Ausgangsstrom von 140 V getroffen, so müßte diese Schweißstromquelle, entsprechend der in strichzwei-punktierten Linie dargestellte Ausgangskennlinie 74, eine Leistung von 12,6 kW liefern können. Diese Schweißstromquelle wäre daher für einen üblichen Schweißprozeß, wie er mit der erfindungsgemäßen Schweißstromquelle 2 mit einer Leistung von 5 kW erzielt werden kann, wesentlich überdimensioniert und gleichzeitig würde die Baugröße und das Gewicht einer derartigen Schweißstromquelle sich sehr vergrößern.

Die schematisch dargestellte Ausgangskennlinie 73 der Fig. 10 der erfindungsgemäßen Schweißstromquelle 2 wird derartig gebildet, daß aufgrund der Dimensionierung der Bauteile bzw. des Leistungsteils 3 eine entsprechende Energielieferung möglich ist, wobei der spezielle Verlauf der Ausgangskennlinie 73 durch den Einfluß des Resonanzkreises 27 gebildet wird, d.h., daß grundsätzlich die Ausgangskennlinie 73 einer rechteckförmigen Darstellung der strichpunktierten Linie einer aus dem Stand der Technik eingetragenen Kennlinie entspricht und aufgrund der vorhandenen Energie im Resonanzkreis 27 eine Veränderung der Ausgangskennlinie 73 entsprechend der schematischen Darstellung bewirkt wird.

Dabei ist es beispielsweise möglich, daß, ausgehend von einem Stromwert 88 von ca. 110 A, eine Ausgangsspannung von ca. 25 V für den Schweißprozeß zur Verfügung steht. Dies ist insofern notwendig, da bei einer weiter eingetragenen Normkennlinie 89 bei einem derartigen Ausgangsstrom eine Ausgangsspannung von ca. 25 V für einen Schweißprozeß notwendig ist. Ausgehend von dem Dimensionierungsbereich der Schweißstromquelle 2, welche durch den Stromwert 88 dargestellt ist, kann die Schweißstromquelle 2 einen maximalen Ausgangsstrom 90 beispielsweise von 140 A mit einer geringeren Ausgangsspannung 91 von ca. 15 V liefern, wodurch mehr Leistung für die Auflösung eines Kurzschlusses geliefert werden kann und ein Dauerbetrieb des Schweißgerätes mit einem Strom entsprechend des Stromwertes 88 möglich ist. Durch eine Reduzierung des Stromes wird nunmehr von der Schweißstromquelle 2 eine Erhöhung der Spannung durchgeführt, wobei bei einer Verringerung auf ca. 60 A eine Erhöhung der Spannung beispielsweise auf 40 V eintritt. Von diesem Punkt tritt beispielsweise eine exponentielle Spannungserhöhung ein, wobei die Ausgangsspannung - gemäß Fig. 11 - überwacht wird, sodaß bei Überschreiten der maximal zulässigen Sollspannung U max entsprechend eines Spannungswertes 92 von der Steuervorrichtung 4 das nachstehend beschriebene Sonderregelverfahren eingeleitet wird und somit eine Begrenzung der Spannung stattfindet. Würde dies nicht der Fall sein, so würde entsprechend der dargestellten strichlierten Linie die Spannung unendlich, also begrenzt durch die Verlustleistungen der Bauelemente, weiter ansteigen, sodaß es zu Zerstörung der Bauelemente kommt. Aufgrund des von der Steuervorrichtung 4 eingeleiteten Sonderregelverfahrens wird nunmehr die Spannung auf einen vordefinierten Wert geregelt bzw. begrenzt.

Der Vorteil einer derartigen Ausgangskennlinie 73 liegt nun darin, daß bei geringem Stromfluß eine entsprechend hohe Ausgangsspannung zur Aufrechterhaltung des Lichtbogens 15 vorhanden ist, wobei die Dimensionierung des Leistungsteils bzw. der Schweißstromquelle 2 gering gehalten werden kann, da die zusätzlich benötigte Energie vom Resonanzkreis 27 zur Verfügung gestellt wird.

Da sich die Resonanzfrequenz des seriellen und/oder parallelen Schwingkreises, insbesondere des Resonanzkreises 27, in der Schweißstromquelle 2 in Abhängigkeit des Ausgangszustands des Verbrauches einstellt, kann es aufgrund der hohen Ausgangsänderung, insbesondere der hohen Widerstandsänderungen, dazu kommen, daß die Synchronisation nicht in einer vorgegeben Zeitdauer stattfinden kann, sodaß der selbst schwingende Resonanzkreis 27 automatisch beendet wird. Dies kann insofern erfolgen, da auch während einer Freilaufphase oder während des Sonderbetriebes, in der keine Energie von der Energiequelle 29 geliefert wird, Energie an den Verbraucher abgegeben wird bzw. durch die eigenen Bauteilverluste der Stromquelle Energie verbraucht wird und somit die Schweißstromquelle 2 neu gestartet oder hochgefahren werden muß.

Damit dies nicht eintreten kann, kann von der Steuervorrichtung 4 zusätzlich zu dem zuvor beschriebenen Steuer- und/oder Regelverfahren mit dem Sonderbetrieb durch schalten von einer Treibphase in eine weitere Treibphase oder in den Sonderbetrieb S5 oder S6 ein Sonderregelverfahren durchgeführt werden. Hierzu ist es auch möglich, daß aufgrund der Überschreitung eines Parameters, insbesondere des Resonanzstromes 58 oder der Schweißspannung, über einen vorgegebenen Sollwert ein Sonderregelverfahren aufgerufen und durchgeführt werden kann.

Wird nämlich bei einer Ausgangsänderung von der Steuervorrichtung 4 die Brückenschaltung 28 in den Sonderzustand S5 und S6 geschaltet, so wird von der Steuervorrichtung 4 überwacht, wie oft von einem Sonderzustand S5 oder S6 in einen weiteren Sonderzustand S6 oder S5 geschaltet wird. Dabei ist in der Steuervorrichtung 4 hinterlegt, wie oft zwischen den Sonderzuständen S5 und S6 hin und her geschaltet werden darf, bevorzugt vier mal. Würde nämlich zu oft zwischen den Sonderzuständen S5 und S6 hin und her geschaltet, so würde aufgrund der Bauteilverluste der selbst schwingende Resonanzkreis 27, insbesondere der Resonanzstrom 58 und/oder die Resonanzspannung, erlöschen und es könnte der Schweißprozeß nicht mehr weitergeführt werden, da keine Energie von der Energiequelle 29 in den Resonanzkreis 27 zugeführt wird.

Überschreitet der Sonderbetrieb, also der Aufruf der Schaltzustände S5 oder S6, den vorgegeben Schaltwert - bevorzugt vier mal -, so wird von der Steuervorrichtung 4 die Brückenschaltung 28 in das Sonderregelverfahren geschaltet, wobei hierbei eine Ansteuerung der Schaltelemente 32 bis 35 in Form der Treibphasen erfolgt. Dabei wird jedoch die Pulsweite auf ein Minimum reduziert, sodaß eine geringe Energieeinspeisung von der Energiequelle 29 zustande kommt und somit die Schwingung des Resonanzkreises 27 aufrecht erhalten bleibt. Die Einspeisung der Energie kann dabei über mehrere Perioden erfolgen bzw. ist die Zeitdauer oder die Periodenanzahl in der Speichervorrichtung 4 hinterlegt, sodaß nach Ablauf dieses Sonderregelverfahrens wieder in den zuvor anliegenden Schaltzustand S5 oder S6 zurückgekehrt wird und neuerlich überwacht wird, ob nunmehr eine Synchronisation möglich ist. Die Rückkehr in den zuvor anliegenden Schaltzustand S1 bis S6 ist jederzeit möglich, da von der Steuervorrichtung 4 eine Zuordnung der Schaltzustände S1 bis S6 zu den Halbperioden des Resonanzstromes 58 auch während der unterschiedlichen Sonderfälle durchgeführt wird und somit immer in einen bestimmten Schaltzustand S1 bis S6 jederzeit zurückgekehrt werden kann.

Weiters ist es möglich, daß aufgrund der Schwingung des Resonanzkreises 27 die Spannung über einen vorgegebenen maximalen Spannungswert und/oder Stromwert - gemäß den Fig. 10 und 11 - steigen kann, sodaß bei einem Eintritt eines derartigen Falles von der Steuervorrichtung 4 wiederum ein Sonderregelverfahren durchgeführt wird. Diese Überwachung ist bereits kurz in Fig. 11 durch die Überwachung unterschiedlicher Parameter beschrieben und dargestellt. Tritt ein derartiger Fall ein, so wird wiederum zuerst die Pulsbreite für die Brückenschaltung 28 auf ein Minimum reduziert. Gleichzeitig wird überwacht, ob nach einem oder mehreren Nulldurchgängen des Resonanzstromes 58 das Signal "I resmax und/oder U max" unter den entsprechenden Sollwert abgesunken ist oder nicht. Die Zählung der Anzahl der Nulldurchgänge für das Absinken der Parameter unter den Sollwerten ist voreinstellbar und wird in der Steuervorrichtung 4 gespeichert. Dieser Vorgang kann mehrmals durchgeführt werden, wobei jedoch nach Überschreiten einer bestimmten Anzahl derartiger Regelversuche von der Steuervorrichtung 4 die Brückenschaltung 28 deaktiviert wird, d.h., daß sämtliche Schaltelemente 32 bis 35 deaktiviert werden, sodaß sich der Resonanzstrom 58 und die Resonanzspannung im Resonanzkreis 27 über die Bauteilverluste kompensieren kann und somit die Schweißstromquelle 2 neu gestartet bzw. neu hochgefahren werden kann.

Ein derartiger Regelvorgang ist in dem Diagramm nach Fig. 10 ersichtlich. Hier steigt die Spannung, insbesondere der Spannungswert 92, der Ausgangskennlinie 73 bei Absinken des Ausgangsstromes über einen voreinstellbaren Spannungssollwert "U max", der dem Spannungswert 92 entspricht. Würde nunmehr kein Sonderregelverfahren durchgeführt, so würde die Spannung entsprechend der strichlierten Linie weiter ansteigen. Durch diese hohe Spannung könnten die Bauteile, insbesondere die Dioden und die Leistungstransistoren, zerstört werden bzw. müßte die Bauteile der Schweißstromquelle 2 übermäßig groß dimensioniert werden. Hat also die Spannung den Sollwert und somit den Spannungswert 92 erreicht, so wird durch Verkleinerung der Pulsweite bzw. der Pulsbreite nunmehr weniger Energie geliefert, sodaß sich die Spannung durch die Bauteilverluste und/oder der Lieferung von Energie an den Verbraucher wieder reduziert. Anschließend wird von der Steuervorrichtung 4 wieder in den Normalbetrieb, also in einen der Schaltzustände S1 bis S4, geschaltet.

Dabei kann es nunmehr möglich sein, daß abermals der Sollwert überschritten wird, wie dies am Spannungswert 93 der Ausgangskennlinie beispielsweise dargestellt ist, sodaß abermals die Pulsweite auf ein Minimum über eine voreinstellbare Anzahl von Halb- oder Vollperioden reduziert wird. Dieses Sonderregelverfahren kann nunmehr so lange durchgeführt werden, bis keine Energie mehr im Resonanzkreis 27 enthalten ist, oder daß nach Erreichen einer bestimmten Anzahl derartiger Regelvorgänge von der Steuervorrichtung 4 die Brückenschaltung 28 deaktiviert wird und sich somit die verbleibende Energie im Resonanzkreis 27 selbständig abbaut. Dies ist ab dem Zeitpunkt 94 ersichtlich, wobei sich die Energie exponentiell abbaut, d.h., daß sich die Spannung exponentiell erhöht und der Strom stetig verringert. Dadurch wird weiters erreicht, daß am Beginn eines Schweißprozesses bzw. für die Wiederzündung des Lichtbogens 15 eine sehr hohe Spannung zur Verfügung steht. Weiters ist es möglich, daß für unterschiedliche Stromwerte unterschiedliche Spannungssollwerte hinterlegt werden, sodaß eine derartige exponentielle Kurve gebildet werden kann.

Es kann also gesagt werden, daß bei Überschreiten eines vorgegebenen und einstellbaren Sollwertes von der Steuervorrichtung 4 ein Sonderregelverfahren durchgeführt wird, wobei hierzu die Pulsweite für die Brückenschaltung 28 auf ein Minimum reduziert wird und daß nach einem oder mehreren Stromnulldurchgängen des Resonanzstromes 58 die Brückenschaltung 28 deaktiviert wird. Dazu werden zumindest die Ausgangsspannung am Verbraucher, also an den Ausgangsklemmen 51 und 52, und der Resonanzstrom 58 überwacht und mit einem Sollwert verglichen.

Zusammenfassend kann nunmehr gesagt werden, daß bei der Schweißstromquelle 2 mit dem Resonanzkreis 27 in Form eines Seriell/Parallel-Konverters ein Verfahren beschrieben wird, bei dem zur Ansteuerung der Brückenschaltung 28, insbesondere der Halb- oder Vollbrücke, mehrere fix vorgegebene Schaltzustände S1 bis S6 für die Schaltelemente 32 bis 35 der Brükkenschaltung 28 gespeichert werden, wobei in einem geregelten Ablauf von der Steuervorrichtung 4 im Normalbetrieb, also über oder unter der Resonanzfrequenz einer Zustandsgröße des Resonanzkreises 27, insbesondere des Resonanzstromes 58 oder der Resonanzspannung des Resonanzkreises 27, die Brückenschaltung 28 entsprechend den Schaltzuständen S1 bis S4 aufeinanderfolgend angesteuert wird, wobei beim Auftreten einer Ausgangsänderung, insbesondere einer Widerstandsänderung am Verbraucher, von der Steuervorrichtung 4 ein Sonderbetrieb mit der Brückenschaltung 28 in bzw. mit der Eigenfrequenz des Resonanzkreises 27 durchgeführt wird und die Brückenschaltung (28) entsprechend den für den Sonderbetrieb hinterlegten Schaltzuständen, insbesondere den Schaltzuständen S1 oder S4 bzw. S5 oder S6, angesteuert wird, wobei in den einzelnen Betriebsarten, insbesondere im Normalbetrieb, im Sonderbetrieb und/oder im Sonderregelverfahren die einzelnen Schaltzustände S1 bis S4 für den Normalbetrieb von der Steuervorrichtung (4) den selbstschwingenden Resonanzkreis (27), insbesondere den Nulldurchgängen des Resonanzstromes (58) oder der Resonanzspannung, zugeordnet werden und somit die Schaltzustände S1 bis S4 von der Zustandsgröße des Resonanzkreises 27, insbesondere des Nulldurchganges des Resonanzstromes 58 oder der Resonanzspannung, abhängig sind.

Für den Betrieb der Schweißstromquelle 2 werden also mehrere Betriebsarten, insbesondere ein Normalbetrieb, ein Sonderbetrieb und ein Sonderregelverfahren, durchgeführt, sodaß die Steuervorrichtung 4 die Schweißstromquelle 2, insbesondere die Brückenschaltung 28, derart regeln kann, daß der Arbeitspunkt 57 bei einer Kennlinienänderung des Resonanzkreises 27 - gemäß der Fig. 4 - immer auf der gleichen Seite, insbesondere auf der fallenden oder steigenden Kennlinie des Resonanzkreises 27, gehalten wird.

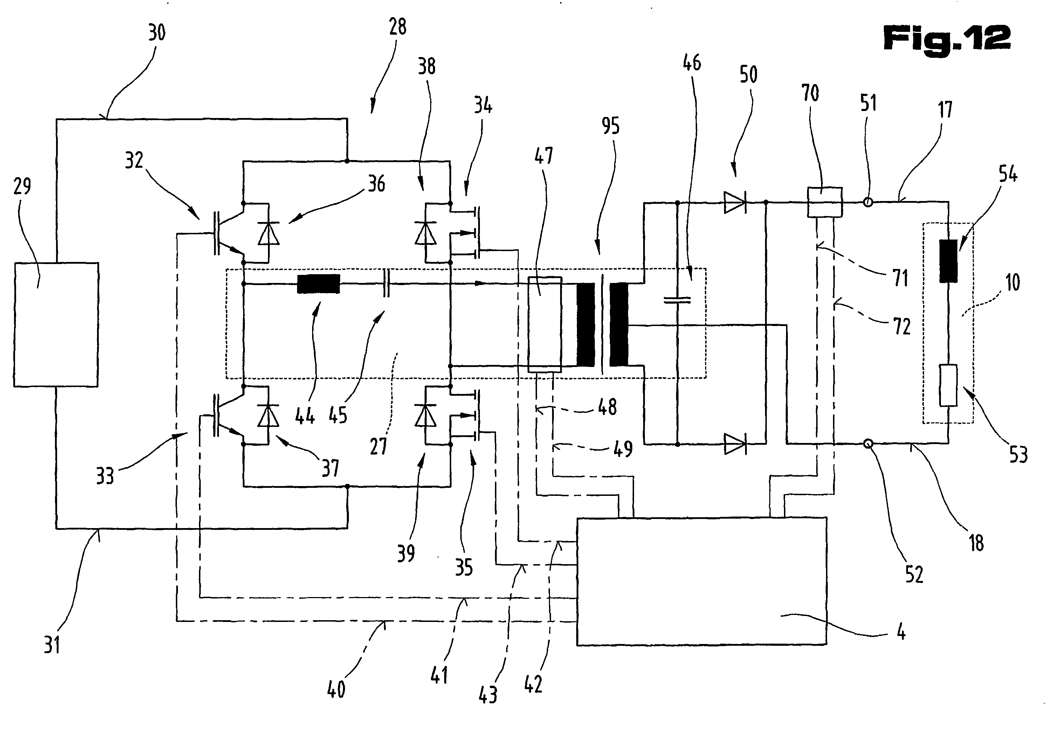

Weiters ist es möglich, daß bei einer derartigen Schweißstromquelle 2 mit dem Resonanzkreis 27 ein Stromwandler 95, insbesondere ein Transformator, eingesetzt werden kann, wodurch eine Umwandlung der gelieferten Energie von der Energiequelle 29 durchgeführt werden kann. Dabei kann der Stromwandler 95 zwischen der Brückenschaltung 28, also dem Resonanzkreis 27, und dem Gleichrichter 50 angeordnet werden, wie dies beispielsweise in Fig. 12 ersichtlich ist. Es ist jedoch auch möglich, daß ein derartiger Stromwandler 95 bereits in der Energiequelle 29 angeordnet ist.

Abschließend sei darauf hingewiesen, daß in den zuvor beschriebenen Ausführungsbeispielen die einzelnen Teile bzw. Bauelemente oder Baugruppen schematisch bzw. vereinfacht dargestellt sind. Des weiteren können auch einzelne Teile der zuvor beschriebenen Merkmalskombinationen oder Maßnahmen der einzelnen Ausführungsbeispiele in Verbindung mit anderen Einzelmerkmalen aus anderen Ausführungsbeispielen eigenständige, erfindungsgemäße Lösungen bilden.

Vor allem können die einzelnen in den Fig. 1; 2, 3, 4, 5, 6, 7; 8, 9; 10,11; 12 gezeigten Ausführungen den Gegenstand von eigenständigen erfindungsgemäßen Lösungen bilden. Die diesbezüglichen erfindungsgemäßen Aufgaben und Lösungen sind den Detailbeschreibungen dieser Figuren zu entnehmen.

### Bezugszeichenaufstellung

- 1: Schweißgerät
- 2: Schweißstromquelle
- 3: Leistungsteil
- 4: Steuervorrichtung
- 5: Umschaltglied

- 6: Steuerventil
- 7: Versorgungsleitung
- 8: Gas
- 9: Gasspeicher
- 10: Schweißbrenner

- 11: Drahtvorschubgerät
- 12: Versorgungsleitung
- 13: Schweißdraht
- 14: Vorratstrommel
- 15: Lichtbogen

- 16: Werkstück
- 17: Versorgungsleitung
- 18: Versorgungsleitung
- 19: Kühlkreislauf
- 20: Strömungswächter

- 21: Wasserbehälter
- 22: Ein-und/oder Ausgabevorrichtung
- 23: Schlauchpaket
- 24: Verbindungsvorrichtung
- 25: Zugentlastungsvorrichtung

- 26: Gehäuse
- 27: Resonanzkreis
- 28: Brückenschaltung
- 29: Energiequelle
- 30: Leitung

- 31: Leitung
- 32: Schaltelement
- 33: Schaltelement
- 34: Schaltelement
- 35: Schaltelement

- 36: Freilaufdiode
- 37: Freilaufdiode
- 38: Freilaufdiode
- 39: Freilaufdiode
- 40: Steuerleitung

- 41: Steuerleitung
- 42: Steuerleitung
- 43: Steuerleitung
- 44: Induktivität
- 45: Kondensator

- 46: Kondensator
- 47: Meßvorrichtung
- 48: Leitung
- 49: Leitung
- 50: Gleichrichter

- 51: Ausgangsklemmen
- 52: Ausgangsklemmen
- 53: Widerstand
- 54: Leitungsinduktivität
- 55: Minimalresonanzfrequenz

- 56: Maximalresonanzfrequenz
- 57: Arbeitspunkt
- 58: Resonanzstrom
- 59: Nullpunktdurchgangserkennung
- 60: Rampenkennlinie

- 61: Spannungskennlinie
- 62: Spannungskennlinie
- 63: Spannungskennlinie
- 64: Spannungskennlinie
- 65: Spannungskennlinie

- 66: Rampensignal
- 67: Periode
- 68: Zeitpunkt
- 69: Zeitdauer
- 70: Meßvorrichtung

- 71: Leitung
- 72: Leitung
- 73: Ausgangskennlinie
- 74: Ausgangskennlinie
- 75: Umsetzer

- 76: Logik-Einheit
- 77: Eingang
- 78: Leitung
- 79: Leitung
- 80: Steuerleitung

- 81: Vergleicher
- 82: Vergleicher
- 83: Vergleicher
- 84: Vergleicher
- 85: Leitung

- 86: Leitung
- 87: Leitung
- 88: Stromwert
- 89: Normkennlinie
- 90: Ausgangsstrom

- 91: Ausgangsspannung
- 92: Spannungswert
- 93: Spannungswert
- 94: Zeitpunkt
- 95: Stromwandler

## Patentansprüche

1. Verfahren zum Regeln einer Schweißstromquelle (1) mit einem als Seriell/Parallel-Konverter ausgebildeten Resonanzkreis (27), bei dem über eine Steuervorrichtung (4) eine Brückenschaltung (28), die durch einzelne Schaltelemente (32-35) gebildet wird, angesteuert wird, und über die Brückenschaltung (28) ein Verbraucher, insbesondere ein Schweißprozeß, mit Energie, insbesondere mit Spannungs- und Strompulsen, aus einer Energiequelle (29) versorgt wird, wobei die Steuervorrichtung (4) die Brückenschaltung (28) in einem Normalbetrieb derart regelt, daß ein Arbeitspunkt (57) auf einer Kennlinie des Resonanzkreises (27) außerhalb einer Resonanzfrequenz liegt, indem die Brückenschaltung (28) entsprechend in der Steuervorrichtung (4) hinterlegter Schaltzustände (S1-S4) aufeinanderfolgend angesteuert wird, wobei beim Auftreten einer Widerstandsänderung des Verbrauchers von der Steuervorrichtung (4) ein Sonderbetrieb mit der Brückenschaltung (28), bei dem die Brückenschaltung (28) mit der Eigenfrequenz des Resonanzkreises (27) angesteuert wird, ausgeführt wird und die Brückenschaltung (28) entsprechend den für den Sonderbetrieb hinterlegten Schaltzuständen bzw. Abläufen angesteuert wird, **dadurch gekennzeichnet, daß** die Schaltzustände (S1-S4) für den Normalbetrieb durch eine positive Treibphase - Schaltzustand (S1) -, eine positive Freilaufphase - Schaltzustand (S2) -, eine negative Treibphase - Schaltzustand (S3) - und eine negative Freilaufphase - Schaltzustand (S4) - der als Vollbrücke ausgebildeten Brückenschaltung (28) festgelegt sind und die Brückenschaltung (28) im Sonderbetrieb von einer Treibphase - Schaltzustand (S1 oder S3) - bevorzugt aufeinanderfolgend in einen von zwei alternativen Schaltzuständen (S5 oder S6) geschaltet wird, in denen die Schaltelemente (34; 35) eines Brückenzweiges deaktiviert werden und die Schaltelemente (33; 32) des weiteren Brückenzweiges aktiviert bleiben und wobei von der Steuervorrichtung (4) überwacht wird, wie oft von einem Sonderzustand (S5; S6) in den weiteren Sonderzustand (S6; S5) geschaltet wird.

2. Verfahren nach Anspruch 1, **dadurch gekennzeichnet, daß** eine Aufeinanderfolge der Schaltzustände (S1-S4) der Schaltelemente (32-35) der Brückenschaltung (28) in der Steuervorrichtung (4) gespeichert wird.

3. Verfahren nach Anspruch 1 oder 2, **dadurch gekennzeichnet, daß** die Aktivierung der Schaltzustände (S1-S4) bei konstanten Verhältnissen am Verbraucher aus einer Zeitdifferenz zwischen zwei unmittelbar aufeinanderfolgenden Nulldurchgängen einer Zustandsgröße des Resonanzkreises (27) abgeleitet wird.

4. Verfahren nach einem oder mehreren der vorhergehenden Ansprüche, **dadurch gekennzeichnet, daß** die einzelnen Schaltzustände (S1 -S4) für den Normalbetrieb von der Steuervorrichtung (4), insbesondere aus einem Nulldurchgang einer Zustandsgröße des selbst schwingenden Resonanzkreises (27), abgeleitet und/oder zugeordnet werden.

5. Verfahren nach einem oder mehreren der vorhergehenden Ansprüche, **dadurch gekennzeichnet, daß** die Umschaltung zwischen den einzelnen Schaltzuständen (S1-S4) von der Steuervorrichtung (4) im Normalbetrieb der Schweißstromquelle (2) kontinuierlich wiederholt wird.

6. Verfahren nach einem oder mehreren der vorhergehenden Ansprüche, **dadurch gekennzeichnet, daß** im Sonderbetrieb die Steuervorrichtung (4) bei Auftritt des Stromnulldurchganges die Brückenschaltung (28) direkt von einer Treibphase - Schaltzustand (S1 oder S3) - in die weitere Treibphase - Schaltzustand (S3 oder S1) - schaltet.

7. Verfahren nach einem oder mehreren der vorhergehenden Ansprüche, **dadurch gekennzeichnet, daß** die Ansteuerung der Brückenschaltung (28), insbesondere der Halb- oder Vollbrücke, durch ein Pulsbreitenmodulationsverfahren, kombiniert mit variabler Periodendauer, mit Steuersignalen phi und alpha durchgeführt wird.

8. Verfahren nach einem oder mehreren der vorhergehenden Ansprüche, **dadurch gekennzeichnet, daß** von der Steuervorrichtung (4) in Abhängigkeit der Steuersignale phi und alpha und des Nulldurchganges einer Zustandsgröße des Resonanzkreises (27), insbesondere des Stromnulldurchganges, im Resonanzkreis (27) die Schaltzustände (S1-S6) für die Schaltelemente (32 bis 35) der Brückenschaltung (28) festgelegt und diese entsprechend angesteuert wird.

9. Verfahren nach einem oder mehreren der vorhergehenden Ansprüche, **dadurch gekennzeichnet, daß** die Schaltelemente (32 und 33), insbesondere IGBT-Transistoren, kurz vor oder nach einem Stromnulldurchgang des Resonanzkreises (27) zu einem Steuersignal alpha und die Schaltelemente (34 und 35), insbesondere MOSFET-Transistoren, zu einem Steuersignal phi, insbesondere einem Phasenwinkel phi des Stromes im Resonanzkreises (27), geschaltet werden.

10. Verfahren nach einem oder mehreren der vorhergehenden Ansprüche, **dadurch gekennzeichnet, daß** die Steuer- bzw. Regelgrößen für die Steuervorrichtung (4) zum Steuern oder Regeln der Brückenschaltung (28) durch die Steuersignal alpha und phi sowie dem Nulldurchgang einer Zustandsgröße des Resonanzkreises (27), insbesondere des Resonanzstromes (58) oder der Resonanzspannung, gebildet werden.

11. Verfahren nach einem oder mehreren der vorhergehenden Ansprüche, **dadurch gekennzeichnet, daß** in der positiven Treibphase - Schaltzustand (S1) - und der negativen Treibphase - Schaltzustand (S3) - von dem Zwischenkreis der Schweißstromquelle (2), also von der Energiequelle (29), ein Stromfluß über die Schaltelemente (32 bis 35) in den Resonanzkreis (27) und somit an den Verbraucher, insbesondere an den Schweißbrenner (10), stattfindet, wogegen bei der positiven oder negativen Freilaufphase - Schaltzustand (S2; S4) - keine Energieversorgung bzw. kein Stromfluß über die Schaltelemente (32-35) der Brückenschaltung (28) von einem Zwischenkreis in den Resonanzkreis (27) stattfindet, wobei jedoch ein Stromfluß im Resonanzkreis (27) aufrecht erhalten bleibt.

12. Verfahren nach einem oder mehreren der vorhergehenden Ansprüche, **dadurch gekennzeichnet, daß** sich der Stromfluß in den Treibphasen durch paarweises Aktivieren der Schaltelemente (32 und 35; 33 und 34) ausbildet, wogegen in der Freilaufphase die Schaltelemente (32 und 34; 33 und 35) aktiviert werden.

13. Verfahren nach einem oder mehreren der vorhergehenden Ansprüche, **dadurch gekennzeichnet, daß** die Steuervorrichtung (4) ständig die Schaltzustände (S1-S4) den gerade anliegenden Halbperioden des Resonanzstromes zuordnet, damit nach einer Synchronisation die Brückenschaltung (28) zum richtigen Zeitpunkt wieder in den Normalbetrieb geschaltet wird.

14. Verfahren nach einem oder mehreren der vorhergehenden Ansprüche, **dadurch gekennzeichnet, daß** mit der Steuervorrichtung (4) bzw. einer Logik-Einheit (76) mehrere Vergleicher (81-84) verbunden werden, wobei die Vergleicher (81-84) die von einer Meßvorrichtung (47 und/oder 70) gelieferten tatsächlich auftretenden Strom- und Spannungswerte, insbesondere die Istwerte, mit entsprechend hinterlegten Sollwerten vergleichen, wobei aufgrund von Überschreitungen der Sollwerte eine Regelung, insbesondere ein Sonderregelverfahren, von der Steuervorrichtung (4) durchgeführt wird.

15. Verfahren nach Anspruch 14, **dadurch gekennzeichnet, daß** der Vergleicher (81) den von der Meßvorrichtung (47) gelieferten Resonanzstrom "I res" mit einem vorgegebenen maximal zulässigen Sollstrom "I max" vergleicht, wobei bei Überschreiten des Sollstromes "I max" ein Signal "I resmax" an die Logik-Einheit (76) über eine Leitung (85) ausgegeben wird.

16. Verfahren nach Anspruch 14, **dadurch gekennzeichnet, daß** der Vergleicher (83) die Schweißspannung "U" der Meßvorrichtung (70) mit einer vorgegebenen maximal zulässigen Sollspannung "U max" vergleicht, wobei bei Überschreiten dieser Sollspannung "U max" ein Signal über eine Leitung (87) an die Logik-Einheit (76) übergeben wird.

17. Verfahren nach Anspruch 15 oder 16, **dadurch gekennzeichnet, daß** von der Steuervorrichtung (4) überwacht wird, ob nach mehreren Nulldurchgängen im Resonanzkreis die Signale "I resmax" und/oder "U max" unter den Sollwert "I max" und/oder "U max" absinken.

## Claims

1. Method of controlling a welding current source (1) having a resonant circuit (27) provided in the form of a serial/parallel converter, whereby a bridge circuit (28) comprising individual switching elements (32-35) is controlled by a control system (4) and a consumer, in particular a welding process, is supplied with energy, in particular with voltage and current pulses, from a power source (29) via the bridge circuit (28), whereby the control system (4) controls the bridge circuit (28) during normal operation in such a way that the bridge circuit (28) is switched consecutively on the basis of the control states (S1-S4) stored in the control system (4) so that the bias point (57) on a characteristic curve of the resonant circuit (27) lies outside a resonance frequency and whenever a change in resistance occurs at the consumer, the control system (4) operates with the bridge circuit (28) in a special operating mode in which the bridge circuit (28) is operated at the natural frequency of the resonant circuit (27) and the bridge circuit (28) is activated on the basis of the control states and sequences stored for the special operating mode, **characterised in that** the control states (S1-S4) fixed for normal operation of the bridge circuit (28) provided as a full bridge are a positive drive phase - control state (S1) -, a positive freewheeling phase - control state (S2) -, a negative drive phase - control state (S3) -, and a negative freewheeling phase - control state (S4) -, and, in the special operating mode, the bridge circuit (28) is switched from a drive phase - control state (S1 or S3) - preferably consecutively, into one of two alternative control states (S5 or S6) in which the switching elements (34; 35) of one bridge branch are deactivated and the switch elements (33; 32) of the other bridge branch remain activated and the control system (4) monitors how often a switch is made from one special mode (S5; S6) to the other special mode (S6; S5).

2. Method as claimed in claim 1, **characterised in that** a sequence of control states (S1-S4) of the switching elements (32-35) of the bridge circuit (28) is stored in the control system (4).

3. Method as claimed in claim 1 or 2, **characterised in that** the control states (S1-S4) are activated during a constant state in the conditions at the consumer on the basis of a time difference between two immediately consecutive current zeros of a status variable of the resonant circuit (27).

4. Method as claimed in one or more of the preceding claims, **characterised in that** the individual control states (S1-S4) for normal operation are derived from and/or assigned to a current zero of a status variable of the independently resonating resonant circuit (27) in particular, by the control system (4).

5. Method as claimed in one or more of the preceding claims, **characterised in that** the control system (4) continuously and repeatedly switches between the individual control states (S1-S4) when the welding current source (2) is running in normal operation.

6. Method as claimed in one or more of the preceding claims, **characterised in that**, in special operating mode, the control system (4) switches the bridge circuit (28) directly from one drive phase - control state (S1 or S3) - into the other drive phase - control state (S3 or S1) whenever the current zero occurs.

7. Method as claimed in one or more of the preceding claims, **characterised in that** the bridge circuit (28), in particular the half or full bridge, is controlled by a process of pulse width modulation combined with a variable period duration, with control signals phi and alpha.

8. Method as claimed in one or more of the preceding claims, **characterised in that**, depending on the control signals phi and alpha and the current zero of a status variable of the resonant circuit (27), in particular the current zero in the resonant circuit (27), the control system (4) sets the control states (S1-S6) for the switching elements (32 to 35) of the bridge circuit (28) and applies them accordingly.

9. Method as claimed in one or more of the preceding claims, **characterised in that** the switching elements (32 and 33), in particular IGBT transistors, are switched to a control signal alpha shortly before or after a current zero of the resonant circuit (27) and the switching elements (34 and 35), in particular MOSFET transistors, are switched to a control signal phi, in particular a phase angle phi of the current in the resonant circuit (27).

10. Method as claimed in one or more of the preceding claims, **characterised in that** the control and regulating variables for the control system (4) for controlling or regulating the bridge circuit (28) are the control signals alpha and phi and a status variable of the resonant circuit (27), in particular the resonance current (58) or the resonance voltage.

11. Method as claimed in one or more of the preceding claims, **characterised in that**, during the positive drive phase - control state (S1) - and the negative drive phase - control state (S3) - a flow of current passes from the intermediate circuit of the welding current source (2), in other words from the power source (29), via the switching elements (32 to 35) into the resonant circuit (27) and hence to the consumer, in particular to the welding torch (10), whereas during the positive or negative freewheeling phase - control state (S2; S4), - no power supply and no flow of current passes via the switching elements (32-35) of the bridge circuit (28) from an intermediate circuit into the resonant circuit (27) but a flow of current is maintained in the resonant circuit (27).

12. Method as claimed in one or more of the preceding claims, **characterised in that** the flow of current in the drive phases is generated by activating the switching elements (32 and 35; 33 and 34) in pairs, whereas the switching elements (32 and 34; 33 and 35) are activated during the freewheeling phase.

13. Method as claimed in one or more of the preceding claims, **characterised in that** the control system (4) constantly assigns the control states (S1-S4) to the half periods of the resonance current prevailing at any time so that once the bridge circuit (28) has been synchronised, a switch is made back to normal operation at the correct time.

14. Method as claimed in one or more of the preceding claims, **characterised in that** several comparators (81-84) are connected to the control system (4) and a logic unit (76) and the comparators (81-84) compare the actually prevailing current and voltage values, in particular the actual values, delivered by a measuring device (47 and/or 70) with corresponding stored desired values, a control being run by the control system (4), in particular a special control process, if the desired values are exceeded.

15. Method as claimed in claim 14, **characterised in that** the comparator (81) compares the resonance current "I res" supplied by the measuring device (47) with a pre-set maximum permissible desired current "I max" and a signal "I resmax" is output to the logic unit (76) via a line (85) if the desired current "I max" is exceeded.

16. Method as claimed in claim 14, **characterised in that** the comparator (83) compares the welding voltage "U" of the measuring device (70) with a pre-set maximum permissible desired voltage "U max" and a signal is output to the logic unit (76) via a line (87) if this desired voltage "U max" is exceeded.

17. Method as claimed in claim 15 or 16, **characterised in that** the control system (4) monitors to see whether, after several current zeros have occurred in the resonant circuit, the signals "I resmax" and/or "U max" have fallen below the desired value "I max" and/or "U max".

## Revendications

1. Procédé pour la régulation d'une source de courant de soudage (1) avec un circuit à résonance (27) réalisé comme convertisseur sériel/parallèle, dans lequel, par un dispositif de commande (4), un montage en pont (28), qui est formé par des éléments de commutation individuels (32-35), est commandé, et par le montage en pont (28), un consommateur, en particulier un processus de soudage, est alimenté en énergie, en particulier en impulsions de tension et de courant, à partir d'une source d'énergie (29), où le dispositif de commande (4) règle le montage en pont (28) en fonctionnement normal de façon qu'un point de travail (57) sur une ligne caractéristique du circuit à résonance (27) se situe à l'extérieur d'une fréquence de résonance, en ce que le montage en pont (28), conformément aux états de commutation (S1-S4) stockés dans le dispositif de commande (4), est commandé successivement, où lors de la survenue d'une modification de la résistance du consommateur, le dispositif de commande (4) exécute un fonctionnement spécial avec le montage en pont (28), où le montage en pont (28) est commandé par la fréquence propre du circuit à résonance (27) et le montage en pont (28) est commandé conformément aux états de commutation respectivement déroulements stockés pour le fonctionnement spécial, **caractérisé en ce que** les états de commutation (S1-S4) pour le fonctionnement normal sont fixés par une phase d'attaque positive, état de commutation (S1), une phase libre positive, état de commutation (S2), une phase d'attaque négative, état de commutation (S3), et une phase libre négative, état de commutation (S4) du montage en pont (28) réalisé comme pont plein, et le montage en pont (28), en fonctionnement spécial, est commuté d'une phase d'attaque, état de commutation (S1 ou S3), de préférence successivement dans un de deux états de commutation alternatifs (S5 ou S6), dans lesquels les éléments de commutation (34; 35) d'une branche du pont sont désactivés, et les éléments de commutation (33; 32) de l'autre branche de pont restent activés, et où le dispositif de commande (4) surveille le nombre de fois où il y a une commutation d'un état spécial (S5; S6) dans l'autre état spécial (S6; S5).

2. Procédé selon la revendication 1, **caractérisé en ce que** la succession des états de commutation (S1-S4) des éléments de commutation (32-35) du montage en pont (28) est stockée dans le dispositif de commande (4).

3. Procédé selon la revendication 1 ou 2, **caractérisé en ce que** l'activation des états de commutation (S1-S4), dans le cas de rapports constants au consommateur, est obtenue d'une différence de temps entre deux passages par zéro directement suivants d'une grandeur d'état du circuit à résonance (27).

4. Procédé selon l'une ou plusieurs des revendications précédentes, **caractérisé en ce que** les états de commutation individuels (S1-S4) pour le fonctionnement normal sont dérivés et/ou associés par le dispositif de commande (4), en particulier d'un passage par zéro d'une grandeur d'état du circuit à résonance (27) oscillant lui-même.

5. Procédé selon l'une ou plusieurs des revendications précédentes, **caractérisé en ce que** la commutation entre les différents états de commutation (S1-S4) est répétée continuellement par le dispositif de commande (4) en fonctionnement normal de la source de courant de soudage (2).

6. Procédé selon l'une ou plusieurs des revendications précédentes, **caractérisé en ce que** lors du fonctionnement spécial, le dispositif de commande (4), lors de la survenue du passage par zéro du courant, commute le montage en pont (28) directement d'une phase d'attaque, état de commutation (S1 ou S3), dans l'autre phase d'attaque, état de commutation (S3 ou S1).

7. Procédé selon l'une ou plusieurs des revendications précédentes, **caractérisé en ce que** la commande du montage en pont (28), en particulier du demi-pont ou pont plein, est effectué par un procédé de modulation de largeur d'impulsion, combiné avec une durée périodique variable, avec des signaux de commande phi et alpha.

8. Procédé selon l'une ou plusieurs des revendications précédentes, **caractérisé en ce que** par le dispositif de commande (4), en fonction des signaux de commande phi et alpha et du passage par zéro d'une grandeur d'état du circuit à résonance (27), en particulier du passage par zéro du courant, dans le circuit à résonance (27), les états de commutation (S1-S6) sont fixés pour les éléments de commutation (32 à 35) du montage en pont (28) et celui-ci est commandé d'une manière correspondante.

9. Procédé selon l'une ou plusieurs des revendications précédentes, **caractérisé en ce que** les éléments de commutation (32 et 33), en particulier des transistors IGBT, sont commutés peu avant ou après un passage par zéro du courant du circuit à résonance (27) à un signal de commande alpha, et les éléments de commutation (34 et 35), en particulier des transistors MOSFET, sont commutés à un signal de commande phi, en particulier un angle de phase phi du courant dans le circuit à résonance (27).

10. Procédé selon l'une ou plusieurs des revendications précédentes, **caractérisé en ce que** les grandeurs de commande respectivement de régulation pour le dispositif de commande (4), pour commander ou régler le montage en pont (28), sont formées par les signaux de commande alpha et phi et par le passage par zéro d'une grandeur d'état du circuit à résonance (27), en particulier du courant de résonance (58) ou de la tension de résonance.

11. Procédé selon l'une ou plusieurs des revendications précédentes, **caractérisé en ce qu'**en phase d'attaque positive, état de commutation (S1), et en phase d'attaque négative, état de commutation (S3), il se produit depuis le circuit intermédiaire de la source de courant de soudage (2), donc de la source d'énergie (29), un flux de courant par les éléments de commutation (32 à 35) dans le circuit à résonance (27) et donc au consommateur, en particulier au chalumeau (10), tandis que dans la phase libre positive ou négative, état de commutation (S2; S4), il n'y a pas d'alimentation en énergie respectivement pas de flux de courant par les éléments de commutation (32-35) du montage en pont (28) d'un circuit intermédiaire dans le circuit à résonance (27), où cependant un flux du courant est conservé dans le circuit à résonance (27).

12. Procédé selon l'une ou plusieurs des revendications précédentes, **caractérisé en ce que** le flux de courant dans les phases d'attaque se produit par activation par paires des éléments de commutation (32 et 35 ; 33 et 34), tandis que dans la phase libre, les éléments de commutation (32 et 34 ; 33 et 35) sont activés.

13. Procédé selon l'une ou plusieurs des revendications précédentes, **caractérisé en ce que** le dispositif de commande (4) attribue continuellement les états de commutation (S1-S4) aux demi-périodes momentanées du courant de résonance pour que, après une synchronisation, le montage en pont (28) soit commuté au bon moment de nouveau en fonctionnement normal.

14. Procédé selon l'une ou plusieurs des revendications précédentes, **caractérisé en ce que** plusieurs comparateurs (81-84) sont reliés au dispositif de commande (4) respectivement à une unité logique (76), où les comparateurs (81-84) comparent les valeurs de courant et de tension effectives, fournies par un dispositif de mesure (47 et/ou 70), en particulier les valeurs réelles, à des valeurs de consigne stockées d'une manière correspondante, où par suite de dépassements des valeurs de consigne, une régulation, en particulier un procédé de régulation spécial, est exécuté par le dispositif de commande (4).

15. Procédé selon la revendication 14, **caractérisé en ce que** le comparateur (81) compare le courant de résonance "I res" fourni par le dispositif de mesure (47) à un courant de consigne maximal autorisé prédéterminé "I max", où lors du dépassement du courant de consigne "I max", un signal "I resmax" est émis à l'unité logique (76) par une ligne (85).

16. Procédé selon la revendication 14, **caractérisé en ce que** le comparateur (83) compare la tension de soudage "U" du dispositif de mesure (70) à une tension de consigne maximale autorisée prédéterminée "U max", où lors du dépassement de cette tension de consigne "U max", un signal est transmis par une ligne (87) à l'unité logique (76).

17. Procédé selon la revendication 15 ou 16, **caractérisé en ce que** le dispositif de commande (4) surveille si après plusieurs passages par zéro dans le circuit à résonance, les signaux "I resmax" et/ou "U max"descendent en dessous de la valeur de consigne "I max" et/ou "U max".
